# EUROPEAN PATENT APPLICATION

(11) **EP 4 354 705 A1**
(43) Date of publication of application: **17.04.2024**
(21) Application number: 22893115.0
(22) Date of filing: 03.11.2022
(51) Int. Cl.: H02J 50/80, H02J 50/10, G08B 21/18, H05B 6/12

(54) **WIRELESS POWER TRANSMISSION DEVICE AND COOKING DEVICE POSITIONING METHOD OF WIRELESS POWER TRANSMISSION DEVICE**

(30) Priority: 10.11.2021 KR 20210153728
(71) Applicant: Samsung Electronics Co., Ltd., Suwon-si, Gyeonggi-do 16677 (KR)
(72) Inventor: CHOI, Jiwoong, Suwon-si, Gyeonggi-do 16677 (KR); KANG, Dongoh, Suwon-si, Gyeonggi-do 16677 (KR); KANG, Hongjoo, Suwon-si, Gyeonggi-do 16677 (KR); KANG, Heejun, Suwon-si, Gyeonggi-do 16677 (KR); SEO, Byungduck, Suwon-si, Gyeonggi-do 16677 (KR); HA, Jonghun, Suwon-si, Gyeonggi-do 16677 (KR)
(74) Representative: Walaski, Jan Filip
(86) International application number: PCT/KR2022/017140
(87) International publication number: WO 2023/085694

(57) **Abstract**

A wireless power transmission apparatus including a plurality of cooking zones, a communication interface to communicate with a cooking appliance, an output interface, a wireless power transmitter comprising a plurality of working coils corresponding to the plurality of cooking zones, and an inverter circuit, and at least one processor configured to: control, upon detecting a first wireless communication signal transmitted from the cooking appliance, the inverter circuit to drive the plurality of working coils to generate a magnetic field according to a plurality of power transmission patterns; receive a second wireless communication signal from the cooking appliance, including information regarding the cooking zone detected at a location of the cooking appliance; and based on the second wireless communication signal, output, through the output interface, the information regarding the cooking zone in which the cooking appliance is located.

## Description

### TECHNICAL FIELD

Embodiments of the disclosure relate to a wireless power transmission apparatus including a plurality of cooking zones, and a method, performed by a wireless power transmission apparatus, of identifying a location of a cooking zone in which a cooking appliance is placed.

### BACKGROUND ART

Induction ranges are heating appliances for cooking using the principle of induction heating and are often called inductions. Compared to gas ranges, induction ranges do not consume oxygen and do not emit waste gas, and thus, indoor air pollution and indoor temperature rises may be reduced. In addition, induction ranges use an indirect method of inducing a to-be-heated object to generate heat by itself, and have high energy efficiency and stability. Because a contact surface is not heated even though the to-be-heated object generates heat by itself, the risk of burns is low, and accordingly, the demand for induction ranges has recently been increasing.

An induction range may include a plurality of burners. In this case, the induction range provides a separate operation button for each burner, and a user should check a burner on which a container is placed and use an operation button for a corresponding burner to cook. When the induction range includes many burners and various types of containers are placed on the induction range, a user's operations may be complicated, and the number of times the user uses the operation button to cook using the induction range may be increased. Therefore, it is necessary to minimize user manipulations of the induction range for user convenience.

### DESCRIPTION OF EMBODIMENTS

### SOLUTION TO PROBLEM

According to an embodiment of the disclosure, a wireless power transmission apparatus, comprising: a plurality of cooking zones, a communication interface configured to communicate with a cooking appliance; an output interface configured to display information regarding the cooking appliance; a wireless power transmitter including a plurality of working coils corresponding to the plurality of cooking zones, and an inverter circuit configured to drive the plurality of working coils; and at least one processor configured to: control, upon detecting a first wireless communication signal transmitted from the cooking appliance through the communication interface, the inverter circuit to drive the plurality of working coils to generate a magnetic field according to a plurality of power transmission patterns that are different; receive a second wireless communication signal from the cooking appliance through the communication interface, the second wireless communication signal including information regarding a cooking zone, among the plurality of cooking zones, corresponding to a power transmission pattern detected at a location of the cooking appliance, among the plurality of power transmission patterns, and identification information regarding the cooking appliance; and control the output interface to output, based on the second wireless communication signal, the information regarding the cooking zone at the location of the cooking appliance, among the plurality of cooking zones, and the identification information regarding the cooking appliance.

According to an embodiment of the disclosure, a method of identifying a location of a cooking appliance on a wireless power transmission apparatus, may include: detecting, by the wireless power transmission apparatus through a communication interface, a first wireless communication signal transmitted from the cooking appliance located on a top plate of the wireless power transmission apparatus, the wireless power communication apparatus having a plurality of cooking zones; controlling, upon detecting the first wireless communication signal , an inverter circuit to drive a plurality of working coils corresponding to the plurality of cooking zones to generate a magnetic field according to a plurality of power transmission patterns that are different; receiving a second wireless communication signal from the cooking appliance through the communication interface, the second wireless communication signal including information regarding the cooking zone corresponding to a power transmission pattern detected at a location of the cooking appliance, among the plurality of power transmission patterns, and identification information regarding the cooking appliance; and control the output interface to output, based on the second wireless communication signal, the information regarding the first cooking zone in which the cooking appliance is located, among the plurality of cooking zones, and the identification information regarding the cooking appliance.

According to an embodiment of the disclosure, a method, performed by a cooking appliance, of communicating with a wireless power transmission apparatus including a plurality of cooking zones may include: in response to receipt of a first level of power from the wireless power transmission apparatus, transmitting a first wireless communication signal through a communication interface; detecting a first power transmission pattern among a plurality of power transmission patterns transmitted from the wireless power transmission apparatus; identifying a first cooking zone corresponding to the first power transmission pattern among the plurality of cooking zones included in the wireless power transmission apparatus; and transmitting a second wireless communication signal to the wireless power transmission apparatus so that information regarding the first cooking zone and identification information regarding the cooking appliance are output through an output interface of the wireless power transmission apparatus, the second wireless communication signal including the information regarding the first cooking zone and the identification information regarding the cooking appliance.

According to an embodiment of the disclosure, a cooking appliance for communicating with a wireless power transmission apparatus including a plurality of cooking zones may include: a communication interface configured to communicate with the wireless power transmission apparatus; a lower-power coil configured to receive, from the wireless power transmission apparatus, a first level of power for driving the communication interface; and at least one processor, and the at least one processor of the cooking appliance may be configured to: when the first level of power is received from the wireless power transmission apparatus through the low-power coil, transmit a first wireless communication signal through the communication interface; detect a first power transmission pattern among a plurality of power transmission patterns transmitted from the wireless power transmission apparatus; identify a first cooking zone corresponding to the first power transmission pattern among the plurality of cooking zones included in the wireless power transmission apparatus; and transmit a second wireless communication signal to the wireless power transmission apparatus so that information regarding the first cooking zone and identification information regarding the cooking appliance are output through an output interface of the wireless power transmission apparatus, the second wireless communication signal including the information regarding the first cooking zone and the identification information regarding the cooking appliance.

According to an embodiment of the disclosure, the plurality of power transmission patterns may be set differently based on at least one of a duration of a power transmission interval, a duration of a power cut-off interval, or a power level.

According to an embodiment of the disclosure, the cooking appliance may further include a reception coil configured to receive a second level of power from the wireless power transmission apparatus, and the second level of power may be greater than the first level of power.

According to an embodiment of the disclosure, the cooking appliance may further include a temperature sensor configured to measure a temperature of contents, and the at least one processor of the cooking appliance may be configured to transmit information regarding the temperature of the contents measured by the temperature sensor to the wireless power transmission apparatus through the communication interface.

### BRIEF DESCRIPTION OF DRAWINGS

The above and other aspects, features, and advantages of certain embodiments of the present disclosure will be more apparent from the following description taken in conjunction with the accompanying drawings, in which:
FIG. 1 is a diagram for describing a cooking system according to an embodiment of the disclosure.
FIGS. 2A, 2B, and 2C are diagrams for describing types of a cooking appliance, according to an embodiment of the disclosure.
FIG. 3 is a block diagram for describing a function of a heating apparatus (a wireless power transmission apparatus), according to an embodiment of the disclosure.
FIG. 4A is a block diagram for describing a function of a heating apparatus (a wireless power transmission apparatus), according to an embodiment of the disclosure.
FIG. 4B is a diagram for describing a wireless power transmitter of a heating apparatus (a wireless power transmission apparatus), according to an embodiment of the disclosure.
FIG. 5 is a flowchart for describing a method by which a heating apparatus identifies a location of a cooking appliance, according to an embodiment of the disclosure.
FIG. 6 is a diagram for describing power transmission patterns according to an embodiment of the disclosure.
FIG. 7 is a diagram for describing power transmission patterns according to an embodiment of the disclosure.
FIG. 8 is a flowchart for describing a method by which a heating apparatus outputs a notification to check a location of a cooking appliance, according to an embodiment of the disclosure.
FIG. 9 is a diagram for describing an operation in which a heating apparatus outputs a notification to check a location of a cooking appliance, according to an embodiment of the disclosure.
FIG. 10A is a flowchart for describing a method by which a heating apparatus detects a type of a cooking appliance, according to an embodiment of the disclosure.
FIG. 10B is a flowchart for describing a method by which a heating apparatus detects a type of a cooking appliance, according to an embodiment of the disclosure.
FIG. 11 is a diagram for describing an operation in which a heating apparatus detects a cooking appliance, according to an embodiment of the disclosure.
FIG. 12 is a diagram for describing an operation performed by a heating apparatus when a first type of cooking appliance (a general induction-heating (IH) container) is placed on a heating apparatus, according to an embodiment of the disclosure.
FIG. 13 is a diagram for describing an operation performed by a heating apparatus when a second type of cooking appliance (a small appliance) is placed on a heating apparatus, according to an embodiment of the disclosure.
FIG. 14 is a diagram for describing an operation performed by a heating apparatus after a cooking appliance is removed from the heating apparatus, according to an embodiment of the disclosure.
FIG. 15 is a diagram for describing an operation in which a heating apparatus displays a notification after a cooking appliance is removed from the heating apparatus, according to an embodiment of the disclosure.
FIG. 16 is a flowchart for describing a method by which a heating apparatus provides a graphical user interface (GUI) according to identification information regarding a cooking appliance, according to an embodiment of the disclosure.
FIG. 17 is a diagram for describing an operation in which a heating apparatus provides a GUI according to identification information regarding a cooking appliance, according to an embodiment of the disclosure.
FIG. 18 is a diagram for describing an operation in which a heating apparatus displays identification information and location information regarding a plurality of cooking appliances, according to an embodiment of the disclosure.
FIG. 19 is a diagram for describing an operation in which a heating apparatus provides a GUI corresponding to identification information regarding a cooking appliance (a coffee machine), according to an embodiment of the disclosure.
FIG. 20 is a diagram for describing an operation in which a heating apparatus provides a GUI corresponding to identification information regarding a cooking appliance (a smart pot), according to an embodiment of the disclosure.
FIG. 21 is a flowchart for describing a method by which a heating apparatus determines a location of a cooking appliance, according to an embodiment of the disclosure.
FIG. 22 is a flowchart for describing a method by which a heating apparatus identifies a location of a cooking appliance by using a near-field communication (NFC) tag included in the cooking appliance, according to an embodiment of the disclosure.
FIG. 23 is a flowchart for describing an operation in which a heating apparatus identifies a location of a cooking appliance by using an NFC tag included in the cooking appliance, according to an embodiment of the disclosure.
FIG. 24 is a flowchart for describing a method by which a heating apparatus identifies a location of a cooking appliance by using NFC, according to an embodiment of the disclosure.
FIG. 25 is a flowchart for describing an operation in which a heating apparatus identifies a location of a cooking appliance by using NFC, according to an embodiment of the disclosure.
FIG. 26 is a diagram for describing an operation in which a heating apparatus is interlocked with a server apparatus, according to an embodiment of the disclosure.
FIGS. 27A and 27B are diagrams for describing an operation in which a server apparatus provides information regarding a heating apparatus through a display apparatus, according to an embodiment of the disclosure.

### MODE OF DISCLOSURE

Hereinafter, the terms used herein will be briefly described, and then, embodiments of the disclosure will be described in detail.

The terms used herein are those general terms currently widely used in the art in consideration of functions in regard to the embodiments of the disclosure, but the terms may vary according to the intention of those of ordinary skill in the art, precedents, or new technology in the art. In addition, in a specific case, the applicant voluntarily may select terms, and in this case, the meanings of the terms are disclosed in corresponding description parts of the embodiments of the disclosure. Thus, the terms used herein have to be defined based on the meanings of the terms together with the description throughout the disclosure.

Throughout the disclosure, the expression "at least one of a, b or c" indicates only a, only b, only c, both a and b, both a and c, both b and c, all of a, b, and c, or variations thereof.

Throughout the disclosure, when a certain part "includes" or "comprises" a certain component, unless there is a particular description contrary thereto, the part may further include or comprise other components, not excluding the other components. In addition, terms such as "...er/or" and "module" used herein refer to units that perform at least one function or operation, and the units may be implemented as hardware or software or as a combination of hardware and software.

Embodiments of the disclosure will now be described in detail with reference to accompanying drawings to be readily practiced by those of ordinary skill in the art. The embodiments of the disclosure may, however, be embodied in many different forms and should not be construed as limited to the embodiments set forth herein. Also, in order to clearly describe the embodiments of the disclosure, parts not related to description are omitted in the drawings, and like reference numerals in the drawings denote like parts throughout the disclosure.

According to an embodiment of the disclosure, a method of identifying a cooking zone in which a cooking appliance is placed, by transmitting power according to different power transmission patterns for respective cooking zones, and a wireless power transmission apparatus therefor may be provided.

According to an embodiment of the disclosure, a method, performed by a wireless power transmission apparatus, of identifying a type of a cooking appliance placed on a top plate, and a wireless power transmission apparatus therefor may be provided.

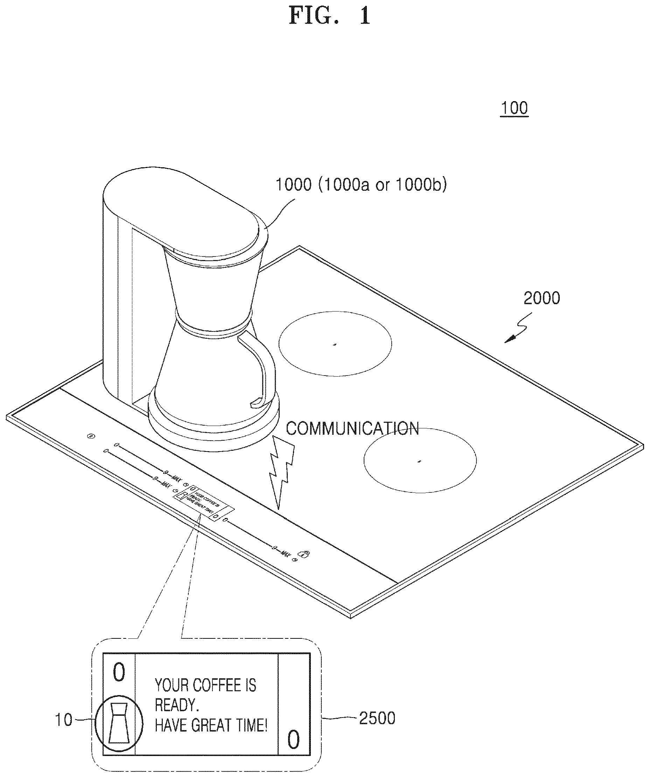

FIG. 1 is a diagram for describing a cooking system according to an embodiment of the disclosure.

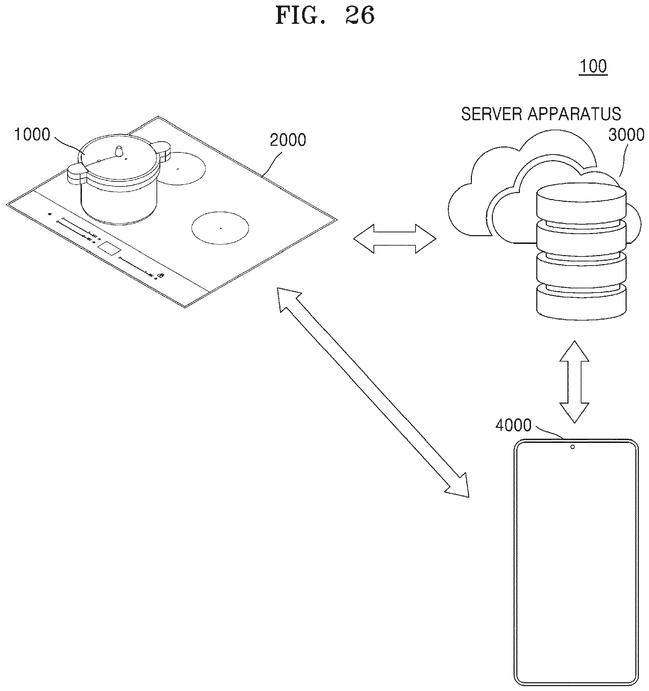

Referring to FIG. 1, according to an embodiment of the disclosure, a cooking system 100 may include a cooking appliance 1000 and a heating apparatus 2000. Hereinafter, the heating apparatus 2000 may be referred to as a wireless power transmission apparatus. However, all of the illustrated components may not be essential components. The cooking system 100 may be implemented by more components than the illustrated components, or may be implemented by fewer components. For example, the cooking system 100 may be implemented with the cooking appliance 1000, the heating apparatus 2000, and a server apparatus (not shown). An embodiment in which the cooking system 100 includes the server apparatus will be described below in detail with reference to FIG. 26. Hereinafter, each component of the cooking system 100 is described.

The cooking appliance 1000 may be an apparatus for heating up contents inside the cooking appliance 1000. The contents inside the cooking appliance 1000 may include liquids, such as water, tea, coffee, soup, juice, wine, and oil, or may include solids, such as butter, meat, vegetables, bread, and rice, but are not limited thereto.

According to an embodiment of the disclosure, the cooking appliance 1000 may wirelessly receive power from the heating apparatus 2000 by using electromagnetic induction. Therefore, according to an embodiment of the disclosure, the cooking appliance 1000 may not include a power line connected to a power outlet.

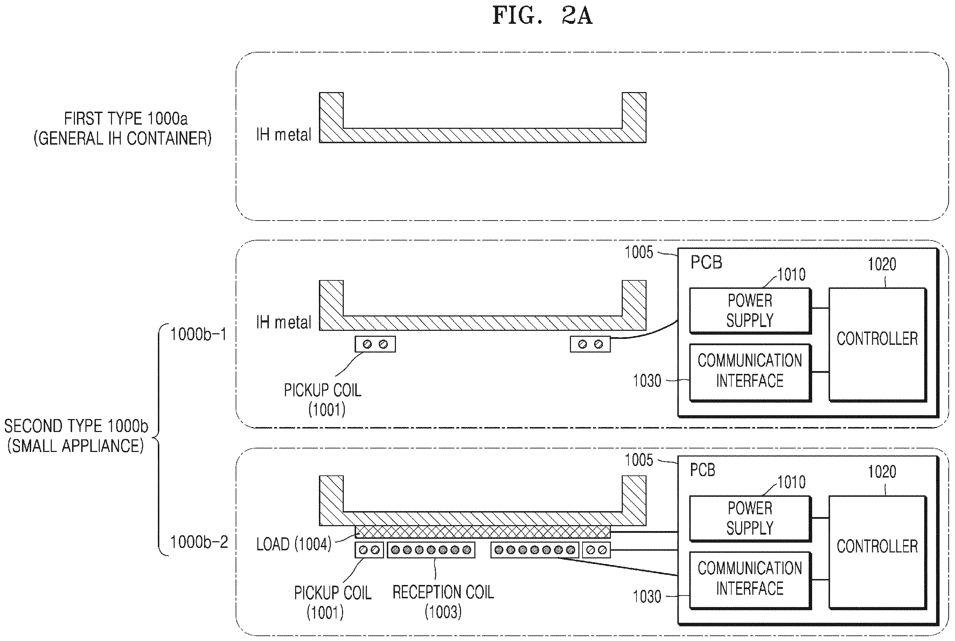

According to an embodiment of the disclosure, there may be various types of cooking appliances 1000 that wirelessly receive power from the heating apparatus 2000. The cooking appliance 1000 may include a first type of cooking appliance 1000a (see FIG. 2A), which is a general induction-heating (IH) container including a magnetic material, or may include a second type of cooking appliance 1000b (see FIG. 2A) including a communication interface. Hereinafter, the second type of cooking appliance 1000b including the communication interface may be defined as a small appliance. Also, the second type of cooking appliance 1000b may include a second-first type of cooking appliance 1000b-1 including a magnetic material (an IH metal) (e.g., an iron component), and a second-second type of cooking appliance 1000b-2 including a reception coil. In the second-first type of cooking appliance 1000b-1, a magnetic field may be induced in a container (an IH metal) itself, and in the second-second type of cooking appliance 1000b-2, a magnetic field may be induced in the reception coil. Types of the cooking appliance 1000 will be described below in more detail with reference to FIGS. 2A to 2C.

The cooking appliance 1000 may include a general IH container, such as a pot, a frying pan, and a steamer, or may include a small appliance, such as an electric kettle, a teapot, a coffee machine (or a coffee dripper), a toaster, a blender, an electric rice cooker, an oven, and an air fryer, but is not limited thereto. The cooking appliance 1000 may include a cooker apparatus. The cooker apparatus may be an apparatus into or from which a general IH container may be inserted or detached. According to an embodiment of the disclosure, the cooker apparatus may be an apparatus capable of automatically cooking contents according to a recipe. The cooker apparatus may also be referred to as a pot, a rice cooker, or a steamer depending on an intended use thereof. For example, when an inner pot capable of cooking rice is inserted into the cooker apparatus, the cooker apparatus may be referred to as a rice cooker. Hereinafter, the cooker apparatus may be defined as a smart pan (or a smart pot).

According to an embodiment of the disclosure, when the cooking appliance 1000 is a small appliance including a communication interface, the cooking appliance 1000 may communicate with the heating apparatus 2000. The communication interface may include a short-range wireless communication interface, a long-distance wireless communication interface, etc. The short-range wireless communication interface may include a Bluetooth communication interface, a Bluetooth low energy (BLE) communication interface, a near-field communication (NFC) interface, a wireless local area network (WLAN) (e.g., Wi-Fi) communication interface, a Zigbee communication interface, an infrared data association (IrDA) communication interface, a Wi-Fi direct (WFD) communication interface, an ultra-wideband (UWB) communication interface, an Ant+ communication interface, etc., but is not limited thereto. When a cooking appliance is remotely controlled by a server apparatus (not shown) in an Internet-of-things (IoT) environment, the long-distance wireless communication interface may be used to communicate with the server apparatus. The long-distance wireless communication interface may include the Internet, a computer network (e.g., a local area network (LAN) or a wide area network (WAN)), a mobile communication interface, etc. The mobile communication interface may include a 3rd-generation (3G) module, a 4G module, a 5G module, a long-term evolution (LTE) module, a narrowband (NB)-loT module, an LTE-machine type communication (MTC) (LTE-M) module, etc., but is not limited thereto.

According to an embodiment of the disclosure, the cooking appliance 1000 may transmit identification information regarding the cooking appliance 1000 to the heating apparatus 2000 through the communication interface. The identification information regarding the cooking appliance 1000 is unique information for identifying the cooking appliance 1000 and may include a medium access control (MAC) address, a model name, device type information (e.g., an IH type ID, a heater type ID, or a motor type), manufacturer information (e.g., a manufacturer ID), a serial number, or manufacture date information (e.g., date of manufacture), but is not limited thereto. According to an embodiment of the disclosure, the identification information regarding the cooking appliance 1000 may be expressed as a series of identification numbers or a combination of numbers and alphabets. Also, according to an embodiment of the disclosure, the cooking appliance 1000 may transmit location information regarding the cooking appliance 1000 to the heating apparatus 2000 through the communication interface. The location information regarding the cooking appliance 1000 may include information regarding a cooking zone (also referred to as a burner) in which the cooking appliance 1000 is located.

According to an embodiment of the disclosure, the cooking appliance 1000 may transmit information to the server apparatus through the heating apparatus 2000. For example, the cooking appliance 1000 may transmit information (e.g., temperature information regarding contents) obtained from the cooking appliance 1000 to the heating apparatus 2000 through short-range wireless communication (e.g., Bluetooth or BLE). In this case, the heating apparatus 2000 may access the server apparatus by using the WLAN (Wi-Fi) communication interface or the long-distance wireless communication interface (e.g., the Internet), and may transmit the information obtained from the cooking appliance 1000 to the server apparatus. Moreover, the server apparatus may provide the information obtained from the cooking appliance 1000, received from the heating apparatus 2000, to a user through a mobile terminal connected to the server apparatus. According to another embodiment of the disclosure, the heating apparatus 2000 may also directly transmit the information obtained from the cooking appliance 1000 to a user's mobile terminal through device-to-device (D2D) communication (e.g., WFD communication or BLE communication).

According to an embodiment of the disclosure, the cooking appliance 1000 may also directly transmit the information (e.g., the temperature information regarding contents) obtained from the cooking appliance 1000 to the server apparatus through the communication interface (e.g., the WLAN (Wi-Fi) communication interface). Also, the cooking appliance 1000 may directly transmit the information (e.g., the temperature information regarding contents) obtained from the cooking appliance 1000 to the user's mobile terminal through short-range wireless communication (e.g., Bluetooth or BLE) or D2D communication (e.g., WFD communication).

According to an embodiment of the disclosure, the heating apparatus 2000 may be an apparatus that wirelessly transmits power to a to-be-heated object (e.g., the cooking appliance 1000) located on a top plate by using electromagnetic induction. The heating apparatus 2000 may also be referred to as an induction range or an electric range. The heating apparatus 2000 may include a working coil that generates a magnetic field for inductively heating the cooking appliance 1000. When the cooking appliance 1000 is the second-second type of cooking appliance 1000b-2 including the reception coil, the working coil may be referred to as a transmission coil.

When power is wirelessly transmitted, it may mean that power is transmitted by using a magnetic field induced in a reception coil or an IH metal (e.g., an iron component) in a magnetic induction method. For example, the heating apparatus 2000 may cause a current to flow in the working coil (the transmission coil) to form a magnetic field, and thus may generate an eddy current in the cooking appliance 1000 or induce a magnetic field in the reception coil.

According to an embodiment of the disclosure, the heating apparatus 2000 may include a plurality of working coils. For example, when the top plate of the heating apparatus 2000 includes a plurality of cooking zones, the heating apparatus 2000 may include a plurality of working coils respectively corresponding to the plurality of cooking zones. Also, the heating apparatus 2000 may include a high-power cooking zone in which a first working coil is provided inside thereof and a second working coil is provided outside thereof. The high-power cooking zone may include three or more working coils.

According to an embodiment of the disclosure, the top plate of the heating apparatus 2000 may include tempered glass, such as ceramic glass, so that the top plate is not easily damaged. Also, a guide mark may be provided on the top plate of the heating apparatus 2000 to guide a cooking zone in which the cooking appliance 1000 needs to be located.

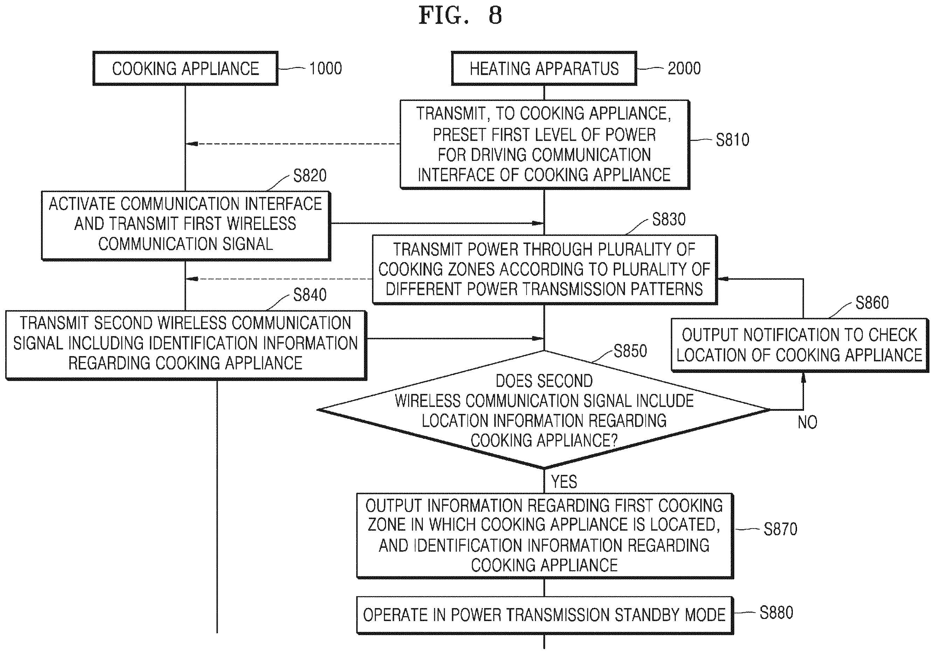

According to an embodiment of the disclosure, the heating apparatus 2000 may detect that the cooking appliance 1000 (e.g., the first type of cooking appliance 1000a or the second-first type of cooking appliance 1000b-1) including a magnetic material is placed on the top plate. For example, based on a change in a current value (inductance) of the working coil due to approach of the cooking appliance 1000, the heating apparatus 2000 may detect that the cooking appliance 1000 is located on the top plate of the heating apparatus 2000. Hereinafter, a mode in which the heating apparatus 2000 detects the cooking appliance 1000 including the magnetic material (an IH metal) is defined as an "IH container detection mode". An operation in which the heating apparatus 2000 detects the cooking appliance 1000 including the magnetic material (an IH metal) will be described below in detail with reference to FIG. 8.

According to an embodiment of the disclosure, the heating apparatus 2000 may include a communication interface for communicating with an external apparatus. For example, the heating apparatus 2000 may communicate with the cooking appliance 1000 or the server apparatus through the communication interface. The communication interface may include a short-range wireless communication interface (e.g., an NFC communication interface, a Bluetooth communication interface, a BLE communication interface, etc.) and a mobile communication interface.

According to an embodiment of the disclosure, the heating apparatus 2000 may detect the cooking appliance 1000 located on the top plate through the communication interface. For example, the heating apparatus 2000 may detect the cooking appliance 1000 by receiving a packet transmitted from the cooking appliance 1000 located on the top plate by using short-range wireless communication (e.g., BLE or Bluetooth). Because the second type of cooking appliance 1000b including the communication interface may be defined as a small appliance (a small object), hereinafter, a mode in which the heating apparatus 2000 detects the cooking appliance 1000 through the communication interface is defined as a "small appliance detection mode".

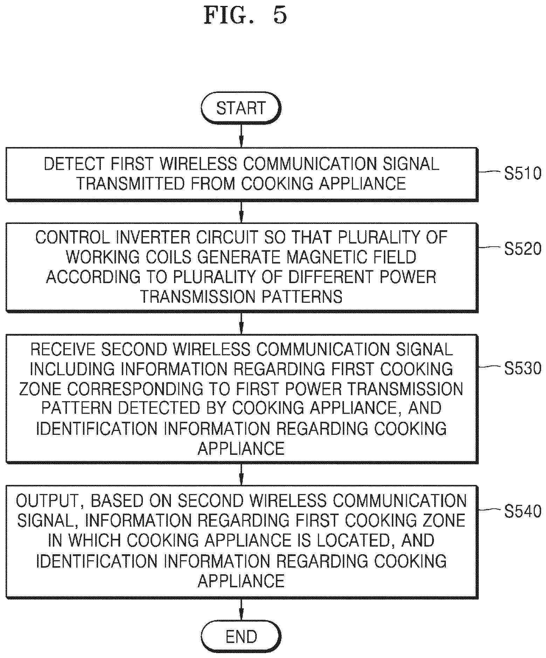

According to an embodiment of the disclosure, the heating apparatus 2000 may receive, from the cooking appliance 1000, the identification information regarding the cooking appliance 1000 by using short-range wireless communication (e.g., BLE communication or Bluetooth communication). In this case, the cooking appliance 1000 may be the second type of cooking appliance 1000b (a small appliance) including the communication interface. Also, when the heating apparatus 2000 outputs power according to different power transmission patterns for respective cooking zones, the heating apparatus 2000 may receive information regarding a first cooking zone corresponding to a first power transmission pattern detected by the cooking appliance 1000, together with the identification information regarding the cooking appliance 1000. In this case, the first cooking zone may be a cooking zone in which the cooking appliance 1000 is located, among the plurality of cooking zones included in the heating apparatus 2000. Referring to FIG. 1, the first cooking zone may be a cooking zone in the lower left corner, in which the cooking appliance 1000 is located. A method by which the heating apparatus 2000 identifies a location of the cooking appliance 1000 by using a plurality of different power transmission patterns will be described below in detail with reference to FIG. 5.

According to an embodiment of the disclosure, the heating apparatus 2000 may display information related to the cooking appliance 1000 through a user interface 2500. For example, when the cooking appliance 1000 is detected, the heating apparatus 2000 may display, on a display unit included in the user interface 2500, the identification information regarding the cooking appliance 1000 and the location information regarding the cooking appliance 1000. Referring to FIG. 1, when a user places the cooking appliance 1000 (e.g., a coffee dripper) on the top plate of the heating apparatus 2000, the heating apparatus 2000 may display a coffee dripper icon 10 on the display unit at a location corresponding to the cooking zone in the lower left corner and provide, to the user, the identification information (e.g., the coffee dripper) regarding the cooking appliance 1000 and the location information (e.g., being located in the cooking zone in the lower left corner) regarding the cooking appliance 1000.

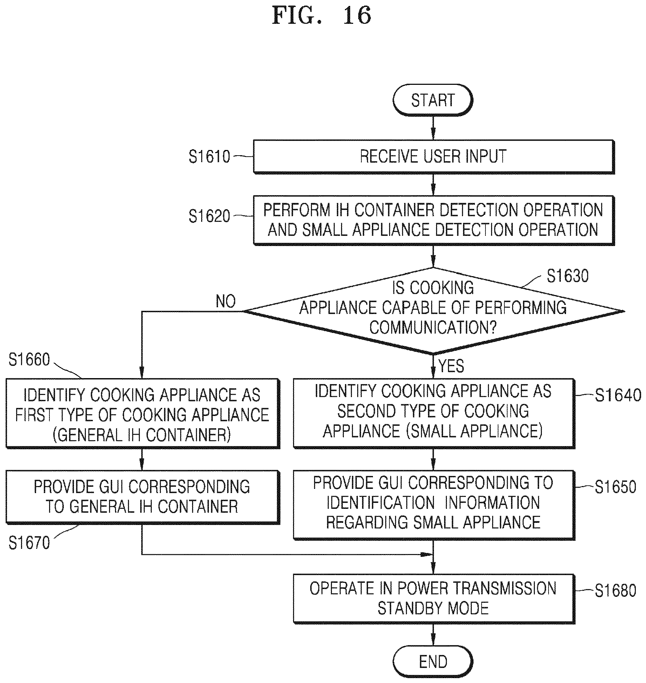

According to an embodiment of the disclosure, the heating apparatus 2000 may also provide a graphical user interface (GUI) corresponding to the identification information regarding the cooking appliance 1000 through the user interface 2500. For example, when the cooking appliance 1000 is a coffee dripper and an operation of the coffee dripper is completed, the heating apparatus 2000 may output text "Your coffee is ready. Have a great time!". An operation in which the heating apparatus 2000 provides a GUI corresponding to the identification information regarding the cooking appliance 1000 will be described below in detail with reference to FIGS. 16 to 20.

According to the cooking system 100 according to an embodiment of the disclosure, even though a user simply places the cooking appliance 1000 on the heating apparatus 2000, the heating apparatus 2000 may automatically identify the type of the cooking appliance 1000 and the location of the cooking appliance 1000 and provide an appropriate GUI to the user, such that user convenience is enhanced. Hereinafter, types of the cooking appliance 1000 according to an embodiment of the disclosure are described with reference to FIGS. 2A to 2C.

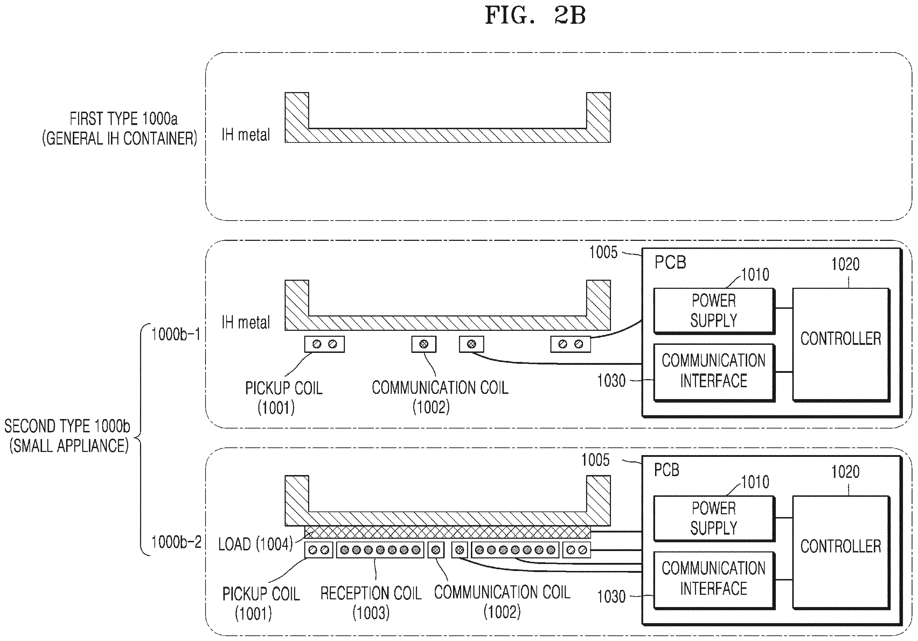

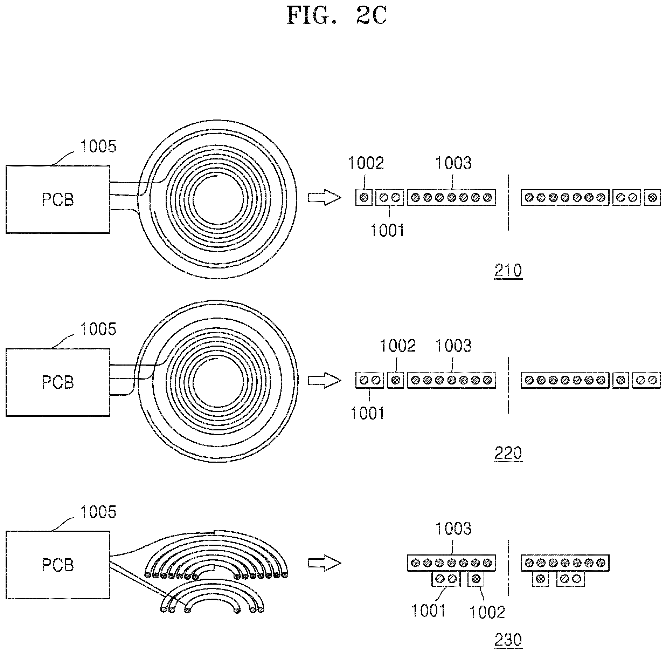

FIGS. 2A, 2B, and 2C are diagrams for describing types of a cooking appliance, according to an embodiment of the disclosure.

Referring to FIG. 2A, the cooking appliance 1000 may include a first type of cooking appliance 1000a, which is a general IH container including a magnetic material (e.g., an IH metal), and a second type of cooking appliance 1000b capable of communicating with the heating apparatus 2000. The second type of cooking appliance 1000b capable of communicating with the heating apparatus 2000 may be defined as a small appliance. According to an embodiment of the disclosure, the second type of cooking appliance 1000b may be classified into a second-first type of cooking appliance 1000b-1 including an IH metal (e.g., an iron component), and a second-second type of cooking appliance 1000b-2 including a reception coil 1003. Each type is now described.

The first type of cooking appliance 1 000a may be inductively heated by the heating apparatus 2000 and may include various types of containers including a magnetic material. IH is a method of heating an IH metal by using electromagnetic induction. For example, when an alternating current (AC) is supplied to a working coil of the heating apparatus 2000, a temporally changing magnetic field is induced inside the working coil. The magnetic field generated by the working coil passes through the bottom surface of the first type of cooking appliance 1000a. When the temporarily changing magnetic field passes through the IH metal (e.g., iron, steel, nickel, or various types of alloys) included in the bottom surface of the first type of cooking appliance 1000a, a current rotating around the magnetic field is generated in the IH metal. A rotating current is referred to as an eddy current, and a phenomenon in which a current is induced by a temporally changing magnetic field is referred to as electromagnetic induction. When the cooking appliance 1000 is the first type of cooking appliance 1000a, heat is generated at the bottom surface of the first type of cooking appliance 1000a by resistance of the eddy current and the IH metal (e.g., iron). Contents inside the first type of cooking appliance may be heated by the generated heat.

The second type of cooking appliance 1000b may include a pickup coil 1001, a power supply 1010, a controller 1020, and a communication interface 1030. In this case, the power supply 1010, the controller 1020, and the communication interface 1030 may be mounted on a printed circuit board (PCB) 1005. The pickup coil 1001 may be a low-power coil that generates power for operating the PCB 1005. When power is supplied to the PCB 1005 through the pickup coil 1001, components mounted on the PCB 1005 may be activated. For example, when power is supplied to the PCB 1005 through the pickup coil 1001, the power supply 1010, the controller 1020, and the communication interface 1030 may be activated.

Referring to FIG. 2B, the second type of cooking appliance 1000b may further include a communication coil 1002. The communication coil 1002 may be a coil for performing short-range wireless communication with the heating apparatus 2000. For example, the communication coil 1002 may include an NFC antenna coil for NFC communication. In FIG. 2B, the number of windings of the communication coil 1002 is expressed as one, but the disclosure is not limited thereto. The communication coil 1002 may be provided with a plurality of windings. For example, the communication coil 1002 may be wound in 5 to 6 turns. An NFC circuit connected to the NFC antenna coil may receive power through the pickup coil 1001. Hereinafter, the above components are described in order.

The power supply 1010 may include a switched mode power supply (SMPS) that receives AC power from the pickup coil 1001 and supplies direct current (DC) power to the controller 1020 or the communication interface 1030. Also, when the controller 1020, the communication interface 1030, and other components in the second type of cooking appliance 1000b require AC power or DC power in forms other than commercial AC power, the power supply 1010 may include an inverter and/or a converter that supplies the AC power or the DC power.

The power supply 1010 may include a rectifier (a rectifying circuit) that converts AC power into DC power. The rectifier may convert an alternating voltage of which magnitude and polarity (a positive voltage or a negative voltage) change over time into a direct voltage with a constant magnitude and polarity, and may convert an AC of which magnitude and direction (a positive current or a negative current) change over time into a DC with a constant magnitude. The rectifier may include a bridge diode. The bridge diode may convert an alternating voltage of which polarity changes over time into a positive voltage with a constant polarity, and may convert an AC of which direction changes over time into a positive current with a constant direction. The rectifier may include a DC link capacitor. The DC link capacitor may convert a positive voltage of which magnitude changes over time into a direct voltage with a constant magnitude. The inverter connected to the DC link capacitor may generate AC power of various frequencies and magnitudes required by the second type of cooking appliance 1000b, and the converter may generate DC power of various magnitudes required by the second type of cooking appliance 1000b.

The controller 1020 may include at least one processor, and the at least one processor controls the overall operation of the second type of cooking appliance 1000b. For example, the at least one processor included in the controller 1020 may control the power supply 1010 and the communication interface 1030.

According to an embodiment of the disclosure, the controller 1020 may identify a current location of the second type of cooking appliance 1000b by detecting a power transmission pattern of power received from the heating apparatus 2000 through the power supply 1010. For example, the controller 1020 may determine in which cooking zone the detected power transmission pattern is, by comparing the detected power transmission pattern with pre-stored power transmission patterns for respective cooking zones. In this case, the second type of cooking appliance 1000b may further include a voltage sensor for detecting the power transmission pattern.

The controller 1020 may control the communication interface 1030 to transmit or receive data. For example, the controller 1020 may control the communication interface 1030 to transmit, to the heating apparatus 2000, at least one of identification information regarding the second type of cooking appliance 1000b, location information regarding the second type of cooking appliance 1000b, or communication connection information regarding the second type of cooking appliance 1000b.

According to an embodiment of the disclosure, when the second type of cooking appliance 1000b includes a temperature sensor, the controller 1020 may also control the temperature sensor. For example, the controller 1020 may control the temperature sensor to measure a temperature of contents inside the second type of cooking appliance 1000b and to transmit a result of the measurement to the controller 1020. Also, the controller 1020 may control the temperature sensor to monitor the temperature of the contents at a certain interval. In addition, the controller 1020 may control the communication interface 1030 to transmit temperature information regarding the contents to the heating apparatus 2000 through short-range wireless communication.

The communication interface 1030 may include one or more components that enable communication between the second type of cooking appliance 1000b and the heating apparatus 2000, between the second type of cooking appliance 1000b and a server apparatus (not shown), and between the second type of cooking appliance 1000b and a mobile terminal (not shown). For example, the communication interface 1030 may include a short-range wireless communication interface, a long-distance wireless communication interface, etc.

The short-range wireless communication interface may include a Bluetooth communication interface, a BLE communication interface, an NFC interface, a WLAN (Wi-Fi) communication interface, a Zigbee communication interface, an IrDA communication interface, a WFD communication interface, an UWB communication interface, an Ant+ communication interface, etc., but is not limited thereto. When the second type of cooking appliance 1000b is remotely controlled by the server apparatus (not shown) in an loT environment, the long-distance wireless communication interface may be used to communicate with the server apparatus. The long-distance wireless communication interface may include the Internet, a computer network (e.g., a LAN or a WAN), and a mobile communication interface. The mobile communication interface may include a 3G module, a 4G module, a 5G module, an LTE module, an NB-loT module, an LTE-M module, etc., but is not limited thereto.

According to an embodiment of the disclosure, the second type of cooking appliance 1000b may transmit information to the server apparatus through the heating apparatus 2000. For example, the second type of cooking appliance 1000b may transmit information (e.g., temperature information regarding contents) obtained from the second type of cooking appliance 1000b to the heating apparatus 2000 through short-range wireless communication (e.g., Bluetooth or BLE). In this case, the heating apparatus 2000 may access the server apparatus through the WLAN (Wi-Fi) communication interface or the long-distance wireless communication interface (the Internet), and may transmit the information (e.g., temperature information regarding contents) obtained from the second type of cooking appliance 1000b to the server apparatus. Moreover, the server apparatus may provide the information obtained from the second type of cooking appliance 1000b, received from the heating apparatus 2000, to a user through the mobile terminal connected to the server apparatus. According to another embodiment of the disclosure, the heating apparatus 2000 may also directly transmit the information obtained from the second type of cooking appliance 1000b to a user's mobile terminal through D2D communication (e.g., WFD communication or BLE communication).

Moreover, all of the components illustrated in FIG. 2 may not be essential components. The second type of cooking appliance 1000b may be implemented by more components than the illustrated components, or may be implemented by fewer components. For example, the second type of cooking appliance 1000b may further include a sensor unit, a user interface, a memory, a battery, etc., in addition to the power supply 1010, the controller 1020, and the communication interface 1030. In this case, the user interface may include an input interface that receives a user input, and an output interface that outputs information. The output interface is to output a video signal or an audio signal. The output interface may include a display unit, a sound output unit, a vibration motor, etc. When the display unit and a touch pad form a layered structure and constitute a touch screen, the display unit may also be used as the input interface in addition to the output interface. The sound output unit may output audio data received through the communication interface 1030 or stored in a memory (not shown).

According to an embodiment of the disclosure, when the second type of cooking appliance 1000b includes a battery, the battery may be used as auxiliary power. For example, when the second type of cooking appliance 1000b provides a keep warm function, even though power transmission from the heating apparatus 2000 is interrupted, the second type of cooking appliance 1000b may monitor the temperature of the contents by using power of the battery. When the temperature of the contents is lowered to a threshold temperature or below, the second type of cooking appliance 1000b may transmit a notification to the mobile terminal or request power transmission from the heating apparatus 2000 by using power of the battery.

Also, before the second type of cooking appliance 1000b receives power from the heating apparatus 2000, the second type of cooking appliance 1000b may drive the communication interface 1030 and transmit a wireless communication signal to the heating apparatus 2000 by using power of the battery, and thus may allow the heating apparatus 2000 to identify the second type of cooking appliance 1000b in advance. The battery may include a secondary battery (e.g., a lithium ion battery, a nickel-cadmium battery, a polymer battery, and a nickel hydride battery), a supercapacitor, etc., but is not limited thereto. The supercapacitor is a capacitor with significantly large capacitance and is referred to as an ultra-capacitor or an ultra-high-capacity capacitor.

According to an embodiment of the disclosure, when the second type of cooking appliance 1000b includes a memory, the memory may store a program for processing and controlling the processor, and may store input/output data (e.g., power transmission pattern information for each cooking zone, and identification information regarding the second type of cooking appliance 1000b).

The memory may include at least one type of storage medium including a flash memory, a hard disk-type memory, a multimedia card micro-type memory, a card-type memory (e.g., a secure digital (SD) card or an extreme digital (XD) memory), random access memory (RAM), static RAM (SRAM), read-only memory (ROM), electrically erasable programmable ROM (EEPROM), PROM, a magnetic memory, a magnetic disk, or an optical disc. Programs stored in the memory may be classified into a plurality of modules according to functions thereof. At least one artificial intelligence (Al) model may also be stored in the memory.

According to an embodiment of the disclosure, the second type of cooking appliance 1000b may include the second-first type of cooking appliance 1000b-1 including the IH metal (e.g., an iron component), and the second-second type of cooking appliance 1000b-2 including the reception coil 1003. In the case of the second-first type of cooking appliance 1000b-1, as in the first type of cooking appliance 1000a, which is a general IH container, an eddy current is generated in the IH metal of the second-first type of cooking appliance 1000b-1, and accordingly, contents inside the second-first type of cooking appliance 1000b-1 may be heated. The second-first type of cooking appliance 1000b-1 may include a smart kettle, an electric rice cooker (a smart pot), etc., but is not limited thereto.

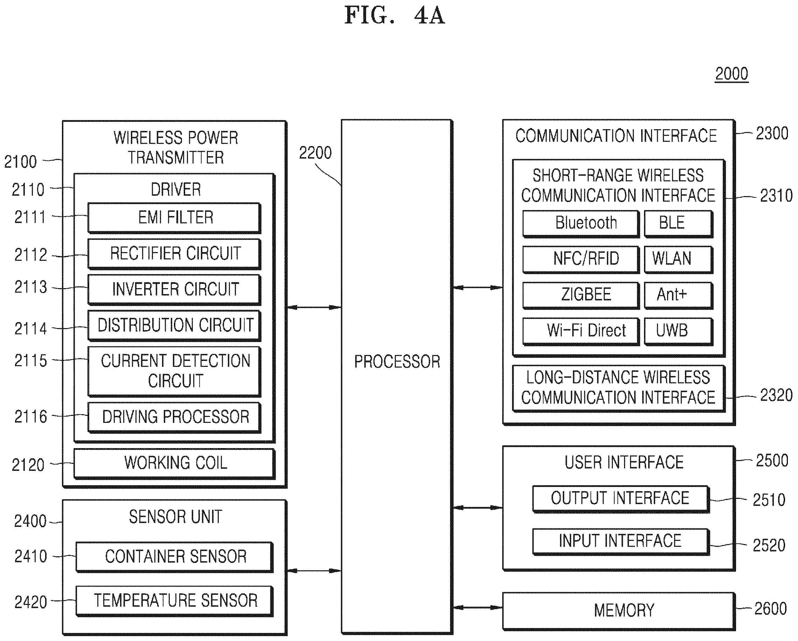

The second-second type of cooking appliance 1000b-2 may further include more components, that is, the reception coil 1003 and a load 1004, than the second-first type of cooking appliance 1000b-1. The reception coil 1003 may be a coil that drives the load 1004 by receiving wireless power transmitted from the heating apparatus 2000. For example, a magnetic field generated from a current flowing in a transmission coil (a working coil 2120 of FIG. 4A) of the heating apparatus 2000 passes through the reception coil 1003, and an induced current flows in the reception coil 1003, such that energy (power) may be supplied to the load 1004. Hereinafter, the induced current flowing in the reception coil 1003 by the magnetic field generated in the transmission coil (the working coil 2120) may be expressed as that the reception coil 1003 receives wireless power from the transmission coil (the working coil 2120). According to an embodiment of the disclosure, the reception coil 1003 may have a concentric circle shape or an elliptical shape, but is not limited thereto. According to an embodiment of the disclosure, a plurality of reception coils 1003 may also be provided. For example, the second-second type of cooking appliance 1000b-2 may include a reception coil for a warming heater and a reception coil for a heating heater. In this case, the reception coil for the heating heater may drive the heating heater, and the reception coil for the warming heater may drive the warming heater.

According to an embodiment of the disclosure, in the second-second type of cooking appliance 1000b-2, the pickup coil 1001, the communication coil 1002, and the reception coil 1003 may be arranged on the same layer. For example, referring to FIG. 2B, the communication coil 1002 may be arranged on the innermost side, the reception coil 1003 may be arranged in the middle, and the pickup coil 1001 may be arranged on the outermost side, but the disclosure is not limited thereto. Referring to 210 of FIG. 2C, the reception coil 1003 may be arranged on the innermost side, the pickup coil 1001 may be arranged in the middle, and the communication coil 1002 may be arranged on the outermost side. Also, referring to 220 of FIG. 2C, the reception coil 1003 may be arranged on the innermost side, the communication coil 1002 may be arranged in the middle, and the pickup coil 1001 may be arranged on the outermost side. In addition, although not shown, the coils may be arranged in the following order from the innermost side.
1) Pickup coil 1001 - Reception coil 1003 - Communication coil 1002
2) Pickup coil 1001 - Communication coil 1002 - Reception coil 1003
3) Communication coil 1002 - Pickup coil 1001 - Reception coil 1003

According to an embodiment of the disclosure, in the second-second type of cooking appliance 1000b-2, the pickup coil 1001, the communication coil 1002, and the reception coil 1003 may also be arranged in a stacked structure. For example, referring to 230 of FIG. 2C, the pickup coil 1001 and the communication coil 1002, which do not have many windings, form one layer, and the reception coil 1003 forms another layer, such that two layers may be stacked.

The load 1004 may include a heater, a motor, or a battery to be recharged, but is not limited thereto. The heater is to heat the contents inside the second-second type of cooking appliance 1000b-2. A shape of the heater may vary, and a material (e.g., iron, stainless steel, copper, aluminum, Incoloy, and Incotel) of an external cover may also vary. According to an embodiment of the disclosure, the second-second type of cooking appliance 1000b-2 may also include a plurality of heaters. For example, the second-second type of cooking appliance 1000b-2 may include a warming heater and a heating heater. The warming heater and the heating heater may produce different levels of heating output. For example, a heating level of the warming heater may be lower than a heating level of the heating heater.

According to an embodiment of the disclosure, the second-second type of cooking appliance 1000b-2 may further include a resonance capacitor (not shown) between the reception coil 1003 and the load 1004. In this case, a resonance value may be set differently according to an amount of power required by the load 1004. Also, according to an embodiment of the disclosure, the second-second type of cooking appliance 1000b-2 may further include a switch unit (not shown) (e.g., a relay switch or a semiconductor switch) for turning on/off the operation of the load 1004.

According to an embodiment of the disclosure, the second-second type of cooking appliance 1000b-2 may include a heater-applied product (e.g., a coffee machine (a coffee dripper) and a toaster), a motor-applied product (e.g., a blender), etc., but is not limited thereto.

According to an embodiment of the disclosure, because the first type of cooking appliance 1000a includes an IH metal, detection is possible in an IH container detection mode of the heating apparatus 2000, but the first type of cooking appliance 1000a is unable to communicate with the heating apparatus 2000, and thus, detection may not be possible in a small appliance detection mode of the heating apparatus 2000. Because the second-first type of cooking appliance 1000b-1 includes an IH metal, detection is possible in the IH container detection mode of the heating apparatus 2000, and the second-first type of cooking appliance 1000b-1 is also able to communicate with the heating apparatus 2000, and thus, detection may be possible even in the small appliance detection mode of the heating apparatus 2000. Because the second-second type of cooking appliance 1000b-2 does not include an IH metal, detection is not performed in the IH container detection mode of the heating apparatus 2000, but the second-second type of cooking appliance 1000b-2 is able to communicate with the heating apparatus 2000, and thus, detection may be possible in the small appliance detection mode of the heating apparatus 2000.

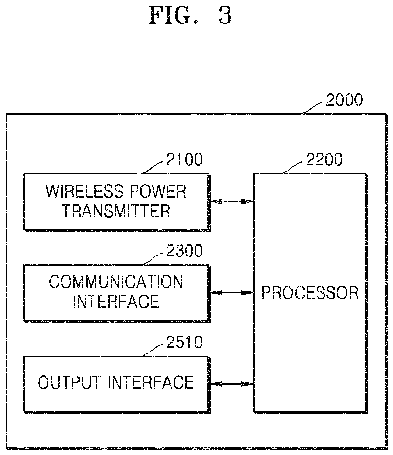

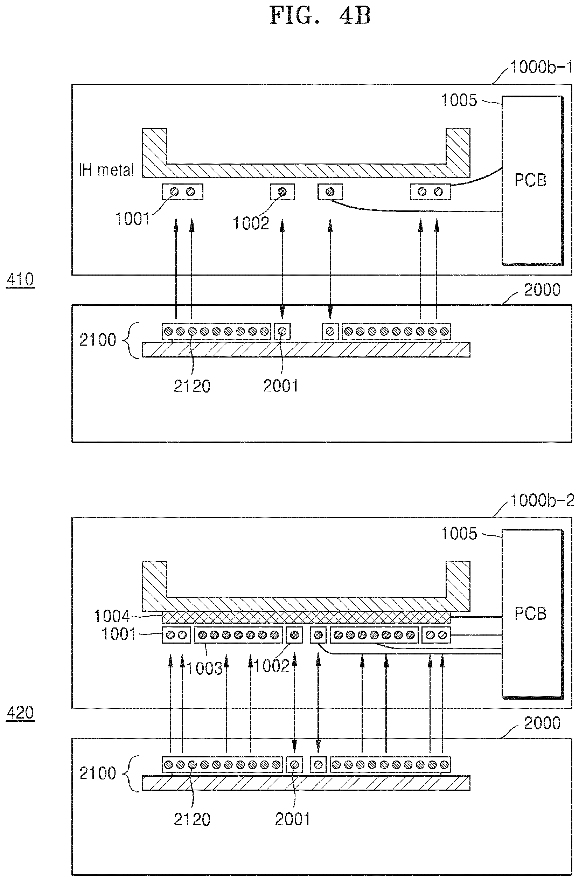

Hereinafter, the heating apparatus 2000 for transmitting power to cooking appliances 1000a and 1000b is described in detail with reference to FIGS. 3, 4A, and 4B.

FIGS. 3 and 4A are block diagrams for describing a function of a heating apparatus (a wireless power transmission apparatus), according to an embodiment of the disclosure.

As shown in FIG. 3, according to an embodiment of the disclosure, the heating apparatus 2000 may include a wireless power transmitter 2100, a processor 2200, a communication interface 2300, and an output interface 2510. However, all of the illustrated components may not be essential components. The heating apparatus 2000 may be implemented by more components than the illustrated components, or may be implemented by fewer components. As shown in FIG. 4A, according to an embodiment of the disclosure, the heating apparatus 2000 may include the wireless power transmitter 2100, the processor 2200, the communication interface 2300, a sensor unit 2400, the user interface 2500, and a memory 2600.

Hereinafter, the above components are described in order.

The wireless power transmitter 2100 may include a driver 2110 and the working coil 2120, but is not limited thereto. The driver 2110 may receive power from an external power source and supply a current to the working coil 2120 in response to a driving control signal of the processor 2200. The driver 2110 may include an electromagnetic interference (EMI) filter 2111, a rectifier circuit 2112, an inverter circuit 2113, a distribution circuit 2114, a current sensing circuit 2115, and a driving processor 2116, but is not limited thereto.

The EMI filter 2111 may block high-frequency noise included in AC power supplied from the external power source and pass an alternating voltage and an AC of a preset frequency (e.g., 50 Hz or 60 Hz). A fuse and a relay for blocking an overcurrent may be provided between the EMI filter 2111 and the external power source. The AC power from which high-frequency noise is filtered out by the EMI filter 2111 is supplied to the rectifier circuit 2112.

The rectifier circuit 2112 may covert AC power into DC power. For example, the rectifier circuit 2112 may convert an alternating voltage of which magnitude and polarity (a positive voltage or a negative voltage) change over time into a direct voltage with a constant magnitude and polarity, and may convert an AC of which magnitude and direction (a positive current or a negative current) change over time into a DC with a constant magnitude. The rectifier circuit 2112 may include a bridge diode. For example, the rectifier circuit 2112 may include four diodes. The bridge diode may convert an alternating voltage of which polarity changes over time into a positive voltage with a constant polarity, and may convert an AC of which direction changes over time into a positive current with a constant direction. The rectifier circuit 2112 may include a DC link capacitor. The DC link capacitor may convert a positive voltage of which magnitude changes over time into a direct voltage with a constant magnitude.

The inverter circuit 2113 may include a switching circuit that supplies or blocks a driving current to the working coil 2120, and a resonance circuit that generates resonance together with the working coil 2120. The switching circuit may include a first switch and a second switch. The first switch and the second switch may be connected in series between a plus line and a minus line, which are output from the rectifier circuit 2112. The first switch and the second switch may be turned on or off in response to a driving control signal of the driving processor 2116.

The inverter circuit 2113 may control a current supplied to the working coil 2120. For example, a magnitude and a direction of the current flowing in the working coil 2120 may be changed in response to turning on/off of the first switch and the second switch, which are included in the inverter circuit 2113. In this case, an AC may be supplied to the working coil 2120. An AC in the form of sine waves is supplied to the working coil 2120 in response to a switching operation of the first switch and the second switch. Also, as a switching interval of the first switch and the second switch is longer (e.g., as a switching frequency of the first switch and the second switch is smaller), the current supplied to the working coil 2120 may be increased, and the strength of a magnetic field (an output of the heating apparatus 2000) output from the working coil 2120 may be increased.

When the heating apparatus 2000 includes a plurality of working coils 2120, the driver 2110 may include the distribution circuit 2114. The distribution circuit 2114 may include a plurality of switches that pass or block a current supplied to the plurality of working coils 2120, and the plurality of switches may be turned on or off in response to a distribution control signal of the driving processor 2116.

The current sensing circuit 2115 may include a current sensor that measures a current output from the inverter circuit 2113. The current sensor may transmit an electrical signal corresponding to a value of the measured current to the driving processor 2116.

The driving processor 2116 may determine, based on an output strength (a power level) of the heating apparatus 2000, a switching frequency (a turn-of/turn-off frequency) of the switching circuit included in the inverter circuit 2113. The driving processor 2116 may generate a driving control signal for turning on/off the switching circuit according to the determined switching frequency.

The working coil 2120 may generate a magnetic field for heating the cooking appliance 1000. For example, when a driving current is supplied to the working coil 2120, a magnetic field may be induced around the working coil 2120. When a current of which magnitude and direction change over time, i.e., an AC, is supplied to the working coil 2120, a magnetic field of which magnitude and direction change overtime may be induced around the working coil 2120. The magnetic field around the working coil 2120 may pass through a top plate including tempered glass, and may reach the cooking appliance 1000 placed on the top plate. Due to the magnetic field of which magnitude and direction change over time, an eddy current rotating around the magnetic field may be generated in the cooking appliance 1000, and electrical resistance heat may be generated in the cooking appliance 1000 due to the eddy current. The electrical resistance heat is heat generated in a resistor when a current flows therethrough, and is also referred to as Joule heat. The cooking appliance 1000 may be heated by the electrical resistance heat, and accordingly, contents inside the cooking appliance 1000 may be heated. In addition, when the cooking appliance 1000 is the second-second type of cooking appliance 1000b-2 including the reception coil 1003 (see FIG. 2), a magnetic field around the working coil 2120 may be induced in the reception coil 1003.

The processor 2200 controls the overall operation of the heating apparatus 2000. The processor 2200 may control the wireless power transmitter 2100, the communication interface 2300, the sensor unit 2400, the user interface 2500, and the memory 2600 by executing programs stored in the memory 2600.

According to an embodiment of the disclosure, an AI processor may be mounted in the heating apparatus 2000. The AI processor may be manufactured into the form of an AI-only hardware chip or may be manufactured as a part of an existing general-purpose processor (e.g., a central processing unit (CPU) or an application processor) or a graphics-only processor (e.g., a graphics processing unit (GPU)) and mounted in the heating apparatus 2000.

According to an embodiment of the disclosure, the processor 2200 may control the inverter circuit 2113 to supply power of a preset level to the cooking appliance 1000 to drive the communication interface 1030 of the cooking appliance 1000, and when the communication interface 1030 of the cooking appliance 1000 is driven, may receive a first wireless communication signal transmitted from the communication interface 1030 of the cooking appliance 1000.

When the first wireless communication signal transmitted from the cooking appliance 1000 is detected, the processor 2200 may control the inverter circuit 2113 so that the plurality of working coils 2120 generate a magnetic field according to a plurality of different power transmission patterns. The plurality of power transmission patterns may be set differently from each other based on at least one of a duration of a power transmission interval, a duration of a power cut-off interval, or a power level. For example, the processor 2200 may control the inverter circuit 2113 to transmit power by differently combining, for respective cooking zones, the duration of the power transmission interval, the duration of the power cut-off interval, or the power level.

Also, the processor 2200 may receive, from the cooking appliance 1000, through the communication interface 2300, a second wireless communication signal including information regarding a first cooking zone corresponding to a first power transmission pattern detected at a location of the cooking appliance 1000, among the plurality of power transmission patterns, and identification information regarding the cooking appliance 1000, and may output, based on the second wireless communication signal, through the output interface 2510, the information regarding the first cooking zone in which the cooking appliance 1000 is located, among a plurality of cooking zones, and the identification information regarding the cooking appliance 1000. A method by which the heating apparatus 2000 identifies a cooking zone, in which the cooking appliance 1000 is located, by using a plurality of power transmission patterns will be described below in detail with reference to FIG. 5.

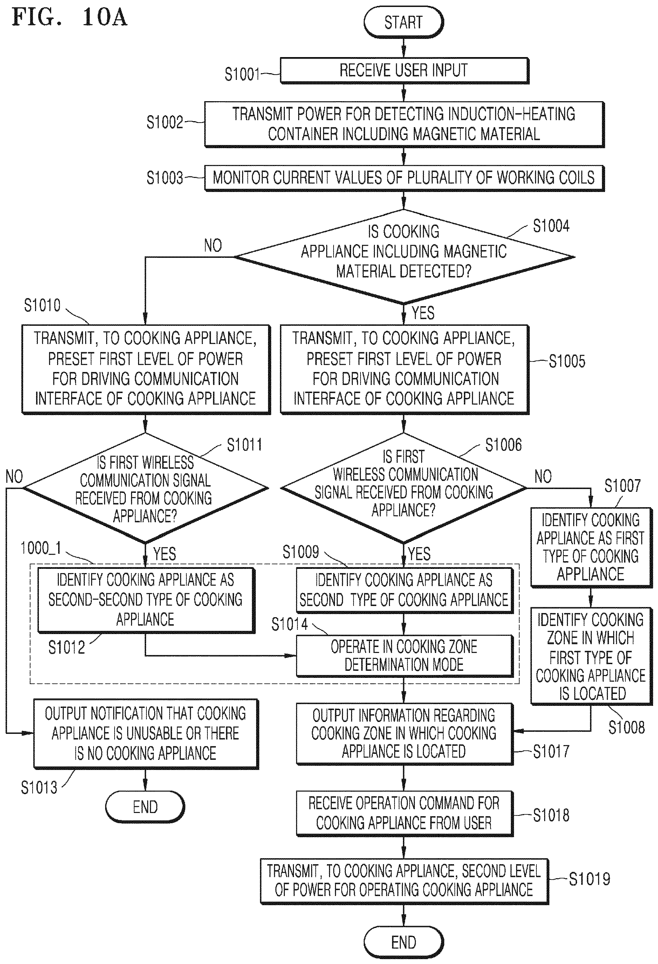

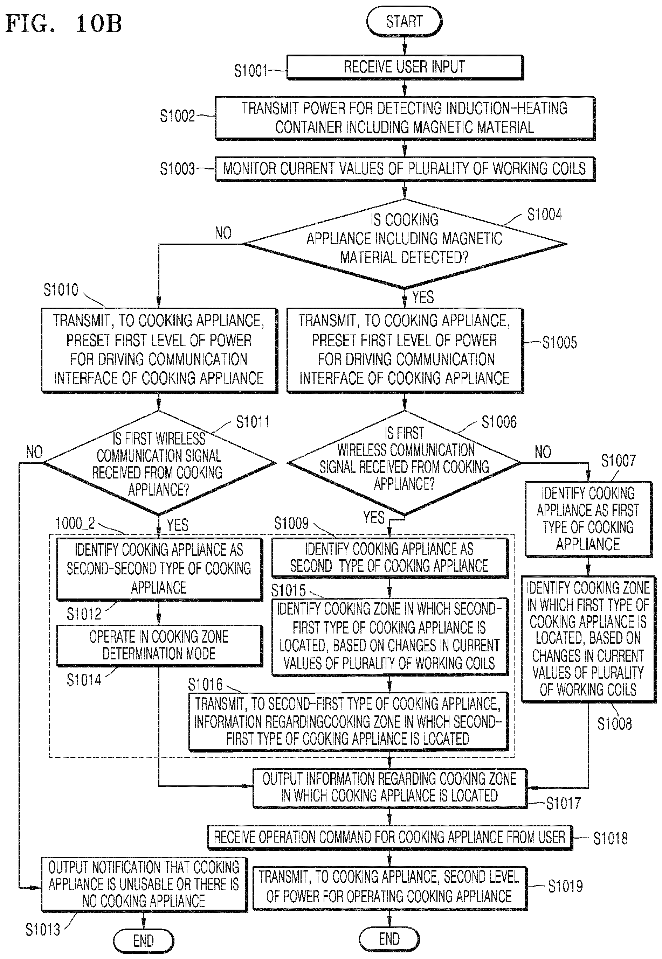

According to an embodiment of the disclosure, when the processor 2200 does not receive the first wireless communication signal from the cooking appliance 1000 within a certain time after detection that the cooking appliance 1000 is located on the top plate of the heating apparatus 2000, the processor 2200 may identify the cooking appliance 1000 as a first type of cooking appliance 1000a, which is a general IH container. In response to detection of the first wireless communication signal transmitted from the communication interface 1030 of the cooking appliance 1000, the processor 2200 may identify the cooking appliance 1000 as a second type of cooking appliance 1000b capable of performing communication. An operation in which the heating apparatus 2000 identifies the type of the cooking appliance 1000 will be described below in detail with reference to FIGS. 10A and 10B.

According to an embodiment of the disclosure, the processor 2200 may control the inverter circuit 2113 to perform communication connection with the cooking appliance 1000 based on communication connection information included in the second wireless communication signal and to transmit first level of power (low power) for maintaining the communication connection with the cooking appliance 1000 to the pickup coil 1001 of the cooking appliance 1000. Also, in response to receipt of an operation command for the cooking appliance 1000 from a user, the processor 2200 may control the inverter circuit 2113 to transmit, to the cooking appliance 1000, second level of power (high power) for operating the cooking appliance 1000. In this case, the first level of power is lower than the second level of power.

The communication interface 2300 may include one or more components to enable communication between the heating apparatus 2000 and the cooking appliance 1000 or between the heating apparatus 2000 and the server apparatus. For example, the communication interface 2300 may include a short-range wireless communication interface 2310 and a long-distance wireless communication interface 2320. The short-range wireless communication interface 2310 may include a Bluetooth communication interface, a BLE communication interface, an NFC interface, a WLAN (Wi-Fi) communication interface, a Zigbee communication interface, an IrDA communication interface, a WFD communication interface, an UWB communication interface, an Ant+ communication interface, etc., but is not limited thereto. When a cooking appliance is remotely controlled by a server apparatus (not shown) in an loT environment, the long-distance wireless communication interface 2320 may be used to communicate with the server apparatus. The long-distance wireless communication interface may include the Internet, a computer network (e.g., a LAN or a WAN), and a mobile communication interface. The mobile communication interface transmits/receives wireless signals to/from at least one of a base station, an external terminal, or a server, through a mobile communication network. In this case, the wireless signals may include a sound call signal, a video call signal, or various types of data according to transmission/reception of text/multimedia messages. The mobile communication interface may include a 3G module, a 4G module, an LTE module, a 5G module, a 6G module, an NB-loT module, an LTE-M module, etc., but is not limited thereto.

The sensor unit 2400 may include a container sensor 2410 and a temperature sensor 2420, but is not limited thereto.

The container sensor 2410 may be a sensor that detects that the cooking appliance 1000 is placed on the top plate. For example, the container sensor 2410 may be implemented as a current sensor, but is not limited thereto. The container sensor 2410 may be implemented as at least one of a proximity sensor, a touch sensor, a weight sensor, a temperature sensor, an illuminance sensor, or a magnetic sensor.

The temperature sensor 2420 may detect a temperature of the cooking appliance 1000 placed on the top plate or a temperature of the top plate. The cooking appliance 1000 may be inductively heated by the working coil 2120 and may be overheated depending on a material thereof. Accordingly, the heating apparatus 2000 may detect the temperature of the cooking appliance 1000 placed on the top plate or the temperature of the top plate, and when the cooking appliance 1000 is overheated, may block the operation of the working coil 2120. The temperature sensor 2420 may be mounted in the vicinity of the working coil 2120. For example, the temperature sensor 2420 may be located at the center of the working coil 2120.

According to an embodiment of the disclosure, the temperature sensor 2420 may include a thermistor of which electrical resistance value changes according to temperature. For example, the temperature sensor may include a negative temperature coefficient (NTC) temperature sensor, but is not limited thereto. The temperature sensor may also include a positive temperature coefficient (PTC) temperature sensor.

The user interface 2500 may include the output interface 2510 and an input interface 2520. The output interface 2510 is to output an audio signal or a video signal, and may include a display unit and a sound output unit.

When the display unit and a touch pad form a layered structure and constitute a touch screen, the display unit may also be used as an input interface in addition to an output interface. The display unit may include at least one of a liquid crystal display, a thin film transistor-liquid crystal display, a light-emitting diode (LED), an organic light-emitting diode (OLED), a flexible display, a three-dimensional (3D) display, or an electrophoretic display. In addition, the heating apparatus 2000 may include two or more display units according to an implementation type of the heating apparatus 2000.

The sound output unit may output audio data received from the communication interface 2300 or stored in the memory 2600. Also, the sound output unit may output a sound signal related to a function performed by the heating apparatus 2000. The sound output unit may include a speaker, a buzzer, etc.

According to an embodiment of the disclosure, the output interface 2510 may display information regarding the cooking appliance 1000. For example, the output interface 2510 may output a GUI corresponding to the identification information regarding the cooking appliance 1000. An operation in which the heating apparatus 2000 outputs a GUI corresponding to the identification information regarding the cooking appliance 1000 will be described below in detail with reference to FIGS. 16 to 20.

According to an embodiment of the disclosure, when the processor 2200 does not receive information regarding a cooking zone, in which the cooking appliance 1000 is located, within a certain time after the inverter circuit 2113 is controlled so that the plurality of working coils 2120 generate a magnetic field according to the plurality of different power transmission patterns, the output interface 2510 may output a notification to check the location of the cooking appliance 1000. Also, according to an embodiment of the disclosure, in response to release of the communication connection with the cooking appliance 1000, the output interface 2510 may output a notification to check the location of the cooking appliance 1000.

The input interface 2520 is to receive an input from a user. For example, the input interface 2520 may include at least one of a key pad, a dome switch, a touch pad (using a touch capacitance method, a pressure-resistive layer method, an infrared sensing method, a surface ultrasonic conductive method, an integral tension measuring method, a piezo effect method, etc.), a jog wheel, or a jog switch, but is not limited thereto.

The input interface 2520 may include a speech recognition module. For example, the heating apparatus 2000 may receive a speech signal, which is an analog signal, through a microphone and may convert a speech part into computer-readable text by using an automatic speech recognition (ASR) model. The heating apparatus 2000 may obtain a user's intention to speak by interpreting the converted text using a natural language understanding (NLU) model. In this case, the ASR model or the NLU model may be an Al model. The AI model may be processed by an AI-only processor designed in a hardware structure specialized for processing the Al model. The AI model may be created through learning. Creating the AI model through learning means that a basic AI model is trained using a plurality of pieces of training data by a learning algorithm such that a predefined operation rule or AI model set to perform a desired characteristic (or purpose) is created. The AI model may include a plurality of neural network layers. Each of the plurality of neural network layers has a plurality of weight values, and may perform a neural network operation using an operation result of a previous layer and an operation between the plurality of weight values.

Linguistic understanding is a technique that identifies and applies/processes human language/characters, and includes natural language processing, machine translation, a dialog system, question answering, speech recognition/synthesis, etc.

The memory 2600 may store a program for processing and controlling the processor 2200 or may store pieces of input/output data (e.g., a plurality of power transmission patterns). The memory 2600 may also store an Al model.

The memory 2600 may include at least one type of storage medium including a flash memory, a hard disk-type memory, a multimedia card micro-type memory, a card-type memory (e.g., an SD or XD memory), RAM, SRAM, ROM, EEPROM, PROM, a magnetic memory, a magnetic disk, or an optical disk. Also, the heating apparatus 2000 may operate a web storage or a cloud server that performs a storage function on the Internet.

FIG. 4B is a diagram for describing a wireless power transmitter of a heating apparatus (a wireless power transmission apparatus), according to an embodiment of the disclosure.

Referring to FIG. 4B, the heating apparatus 2000 may further include a communication coil 2001 on the same plane as a transmission coil (the working coil 2120). In this case, the communication coil 2001 may include an NFC antenna coil for NFC communication. In FIG. 4B, the number of windings of the communication coil 2001 is expressed as one, but the disclosure is not limited thereto. The communication coil 2001 may be provided with a plurality of windings. For example, the communication coil 2001 may be wound in 5 to 6 turns.

According to an embodiment of the disclosure, the communication coil 2001 included in the heating apparatus 2000 and the communication coil 1002 included in the cooking appliance 1000 may be arranged at locations corresponding to each other. For example, when the communication coil 2001 included in the heating apparatus 2000 is arranged at the center of each cooking zone, the communication coil 1002 included in the cooking appliance 1000 may be arranged at the bottom center of the cooking appliance 1000.

Referring to 410 of FIG. 4B, when the second-first type of cooking appliance 1000b-1 is placed on the heating apparatus 2000, the heating apparatus 2000 may supply power to the pickup coil 1001 through the transmission coil 2120. Also, when the heating apparatus 2000 wirelessly transmits power through the transmission coil 2120, an eddy current is generated in the second-first type of cooking appliance 1000b-1, and accordingly, contents inside the second-first type of cooking appliance 1000b-1 may be heated.

Referring to 420 of FIG. 4B, when the second-second type of cooking appliance 1000b-2 is placed on the heating apparatus 2000, the heating apparatus 2000 may supply power to the pickup coil 1001 through the transmission coil 2120. Also, when the heating apparatus 2000 wirelessly transmits power through the transmission coil 2120, an induced current flows in the reception coil 1003 of the second-second type of cooking appliance 1000b-2, such that energy (power) may be supplied to the load 1004. The load 1004 may include a motor or a heater, and the load 1004 may be arranged at a location spaced apart from the reception coil 1003. For example, power generated by the induced current may drive a motor of a blender or may be supplied to a heater of a coffee dripper.

In FIG. 4B, a case in which the heating apparatus 2000 includes the communication coil 2001 has been described as an example, but when the cooking appliance 1000 does not include the communication coil 1002 (see FIG. 2A), the heating apparatus 2000 may also not include the communication coil 2001.

Hereinafter, a method by which the heating apparatus 2000 identifies the location of the cooking appliance 1000 placed on the top plate is described in detail with reference to FIG. 5.

FIG. 5 is a flowchart for describing a method by which a heating apparatus identifies a location of a cooking appliance, according to an embodiment of the disclosure.

In operation S510, according to an embodiment of the disclosure, the heating apparatus 2000 may detect a first wireless communication signal transmitted from the cooking appliance 1000 located on the top plate of the heating apparatus 2000, through the communication interface 2300 of the heating apparatus 2000.

According to an embodiment of the disclosure, when the heating apparatus 2000 operates in the small appliance detection mode, the heating apparatus 2000 may transmit preset first level of power (e.g., about 100 W to about 300 W) to the cooking appliance 1000 to drive the communication interface 1030 of the cooking appliance 1000. The small appliance detection mode is a mode for detecting the second type of cooking appliance 1000b capable of communicating with the heating apparatus 2000.

When the communication interface 1030 of the cooking appliance 1000 is driven by the power transmitted from the heating apparatus 2000, the cooking appliance 1000 may transmit the first wireless communication signal. For example, the cooking appliance 1000 may advertise the first wireless communication signal including a first packet at a certain interval by using short-range wireless communication (e.g., Bluetooth or BLE). The heating apparatus 2000 may receive the first wireless communication signal transmitted from the communication interface 1030 of the cooking appliance 1000. The first packet included in the first wireless communication signal may include identification information regarding the cooking appliance 1000, but is not limited thereto. In addition, the first packet included in the first wireless communication signal may not include location information regarding the cooking appliance 1000 (e.g., information regarding a cooking zone in which the cooking appliance 1000 is currently located).

In operation S520, according to an embodiment of the disclosure, when the first wireless communication signal is detected, the heating apparatus 2000 may control the inverter circuit 2113 so that a plurality of working coils 2120 corresponding to a plurality of cooking zones generate a magnetic field according to a plurality of different power transmission patterns.

According to an embodiment of the disclosure, the first packet included in the first wireless communication signal transmitted from the cooking appliance 1000 may not include the location information regarding the cooking appliance 1000. In this case, the heating apparatus 2000 may not accurately identify on which cooking zone the cooking appliance 1000 is located. Accordingly, in order to identify the location of the cooking appliance 1000, the heating apparatus 2000 may control the inverter circuit 2113 to output power according to different power transmission patterns for respective cooking zones. For example, when the heating apparatus 2000 includes three cooking zones, the heating apparatus 2000 may control the inverter circuit 2113 to output power according to a first power transmission pattern through a first working coil corresponding to a first cooking zone, output power according to a second power transmission pattern through a second working coil corresponding to a second cooking zone, and output power according to a third power transmission pattern through a third working coil corresponding to a third cooking zone.

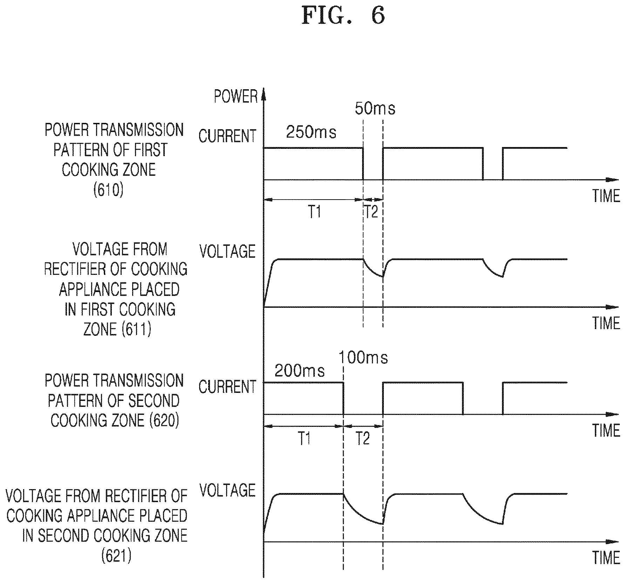

The plurality of power transmission patterns may be set differently from each other based on at least one of a duration of a power transmission interval, a duration of a power cut-off interval, or a power level. Referring to FIG. 6, the plurality of power transmission patterns may be set differently from each other by a duration of a power transmission interval T1 and a duration of a power cut-off interval T2. For example, in a first power transmission pattern 610 of the first cooking zone, a duration of the power transmission interval T1 is 250 ms, and a duration of the power cut-off interval T2 is 50 ms. That is, according to the first power transmission pattern 610, a pattern in which power is transmitted for 250 ms and cut off for 50 ms may be repeated. In a second power transmission pattern 620 of the second cooking zone, a duration of the power transmission interval T1 is 200 ms, and a duration of the power cut-off interval T2 is 100 ms. That is, according to the second power transmission pattern 620, a pattern in which power is transmitted for 200 ms and cut off for 100 ms may be repeated.

Therefore, according to an embodiment of the disclosure, when the heating apparatus 2000 operates in a mode (hereinafter, referred to as a cooking zone determination mode) for receiving the first wireless communication signal from the cooking appliance 1000 and determining a cooking zone in which the cooking appliance 1000 is located, the heating apparatus 2000 may control a first inverter circuit to, according to the first power transmission pattern 610, supply an AC to the first working coil corresponding to the first cooking zone for 250 ms and cut off the supply of the AC for 50 ms, and may control a second inverter circuit to, according to the second power transmission pattern 620, supply an AC to the second working coil corresponding to the second cooking zone for 200 ms and cut off the supply of the AC for 100 ms.

In this case, the cooking appliance 1000 may detect one of the plurality of power transmission patterns by analyzing a voltage output from the rectifier. For example, referring to FIG. 6, when the cooking appliance 1000 is located in the first cooking zone, the cooking appliance 1000 may analyze a first voltage 611 output from the rectifier and may detect the first power transmission pattern 610 in which the duration of the power transmission interval T1 is 250 ms and the duration of the power cut-off interval T2 is 50 ms. In addition, the cooking appliance 1000 may determine that the cooking appliance 1000 is located in the first cooking zone, by identifying that the cooking zone that outputs the first power transmission pattern 610 is the first cooking zone, based on pre-stored information regarding the plurality of power transmission patterns of the heating apparatus 2000. Also, when the cooking appliance 1000 is located in the second cooking zone, the cooking appliance 1000 may analyze a second voltage 621 output from the rectifier and may detect the second power transmission pattern 620 in which the duration of the power transmission interval T1 is 200 ms and the duration of the power cut-off interval T2 is 100 ms. In addition, the cooking appliance 1000 may determine that the cooking appliance 1000 is located in the second cooking zone, by identifying that the cooking zone that outputs the second power transmission pattern 620 is the second cooking zone, based on the pre-stored information regarding the plurality of power transmission patterns of the heating apparatus 2000.

According to an embodiment of the disclosure, the cooking appliance 1000 may also identify the cooking zone in which the cooking appliance 1000 is located, with only the duration of the power cut-off interval T2. For example, as a result of analyzing power output from the rectifier, when the duration of the power cut-off interval T2 is 50 ms, the cooking appliance 1000 may determine that the cooking appliance 1000 is located on the first cooking zone that outputs the first power transmission pattern 610, and when the duration of the power cut-off interval T2 is 100 ms, the cooking appliance 1000 may determine that the cooking appliance 1000 is located on the second cooking zone.

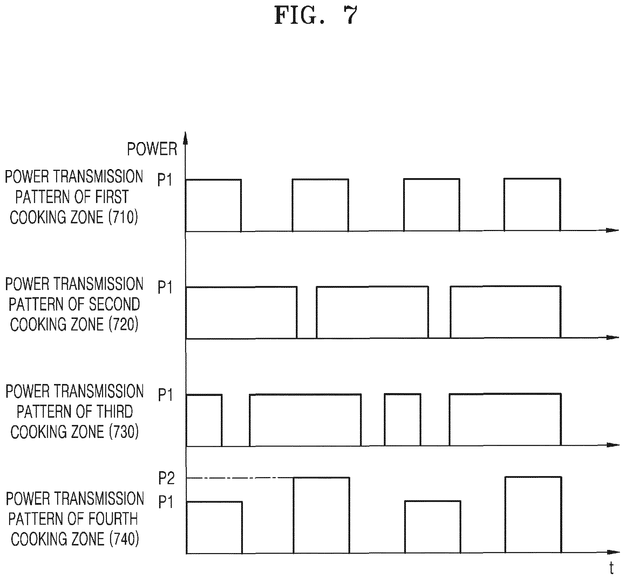

According to an embodiment of the disclosure, the plurality of power transmission patterns may also be variously set based on the duration of the power transmission interval, the duration of the power cut-off interval, and the power level. Referring to FIG. 7, a first power transmission pattern 710 of the first cooking zone may be a pattern in which power is transmitted at a first level P1 for 2 seconds and cut off for 2 seconds. A second power transmission pattern 720 may be a pattern in which power is transmitted at the first level P1 for 2 seconds and cut off for 1 second. A third power transmission pattern 730 may be a pattern in which power is transmitted at the first level P1 for 4 seconds, cut off for 1 second, transmitted again at the first level P1 for 1 second, and then cut off for 1 second. A fourth power transmission pattern 740 may be a pattern in which power is transmitted at the first level P1 for 2 seconds, cut off for 2 seconds, transmitted again at a second level P2 for 2 seconds, and then cut off for 2 seconds.

According to an embodiment of the disclosure, power transmitted to the cooking appliance 1000 according to the plurality of power transmission patterns may be sufficient to drive the communication interface 1030 of the cooking appliance 1000. Therefore, according to an embodiment of the disclosure, when the cooking appliance 1000 determines that the cooking appliance 1000 is located in the first cooking zone based on the first power transmission pattern, the cooking appliance 1000 may transmit a second wireless communication signal including information regarding the first cooking zone. For example, the cooking appliance 1000 may advertise a second packet including the information regarding the first cooking zone by using short-range wireless communication.

In operation S530, according to an embodiment of the disclosure, the heating apparatus 2000 may receive, from the cooking appliance 1000, a second wireless communication signal including information regarding the first cooking zone corresponding to a first power transmission pattern detected at the location of the cooking appliance 1000, among the plurality of power transmission patterns, and identification information regarding the cooking appliance 1000.

For example, the heating apparatus 2000 may receive, from the cooking appliance 1000, through short-range wireless communication, a second packet including information regarding the first cooking zone in which the cooking appliance 1000 is located, and the identification information regarding the cooking appliance 1000. The information regarding the first cooking zone in which the cooking appliance 1000 is located may include identification information (e.g., a first burner or an upper left burner) indicating the first cooking zone among the plurality of cooking zones, and may also include coordinate information regarding the first cooking zone. The identification information regarding the cooking appliance 1000 is unique information for identifying the cooking appliance 1000 and may include a MAC address, a model name, device type information (e.g., an IH type ID, a heater type ID, or a motor type), manufacturer information (e.g., a manufacturer ID), a serial number, or a date of manufacture, but is not limited thereto. According to an embodiment of the disclosure, the identification information regarding the cooking appliance 1000 may be expressed as a series of identification numbers or a combination of numbers and alphabets.

In addition, the second packet included in the second wireless communication signal may further include communication connection information. When the cooking appliance 1000 has been previously paired with the heating apparatus 2000, the communication connection information may include pairing information (e.g., an authentication key). 'Pairing' may refer to, for example, a procedure for verifying a password, identification information, security information, or authentication information designated for intercommunication connection between the cooking appliance 1000 and the heating apparatus 2000, which support a Bluetooth function.

According to an embodiment of the disclosure, the heating apparatus 2000 may identify which type of cooking appliance 1000 is located in which cooking zone by receiving, from the cooking appliance 1000, the second wireless communication signal including the information regarding the first cooking zone in which the cooking appliance 1000 is located, and the identification information regarding the cooking appliance 1000.

In addition, when a plurality of cooking appliances are located in a plurality of cooking zones, the heating apparatus 2000 may receive, from each cooking appliance, identification information and location information regarding each cooking appliance. For example, when a coffee machine is located in the first cooking zone, the heating apparatus 2000 may receive, from the coffee machine, information regarding the first cooking zone and identification information regarding the coffee machine, and when a toaster is located in the second cooking zone, the heating apparatus 2000 may receive, from the toaster, information regarding the second cooking zone and identification information regarding the toaster. In this case, the heating apparatus 2000 may identify that the coffee machine is located in the first cooking zone and the toaster is located in the second cooking zone.

In operation S540, according to an embodiment of the disclosure, the heating apparatus 2000 may output, based on the second wireless communication signal, information regarding the first cooking zone in which the cooking appliance 1000 is located (hereinafter, referred to as location information regarding the cooking appliance 1000), among the plurality of cooking zones, and the identification information regarding the cooking appliance 1000.

According to an embodiment of the disclosure, the heating apparatus 2000 may display the identification information regarding the cooking appliance 1000 on the display unit in text or an image. For example, the heating apparatus 2000 may display text indicating a name or a type of the cooking appliance 1000 or may display an icon image of the cooking appliance 1000. According to another embodiment of the disclosure, the heating apparatus 2000 may also output the identification information regarding the cooking appliance 1000 by speech through the sound output unit.

According to an embodiment of the disclosure, the heating apparatus 2000 may also display that the cooking appliance 1000 is located in the first cooking zone, by displaying the identification information regarding the cooking appliance 1000 on the GUI at a location displaying a power level of the first cooking zone. For example, when the cooking appliance 1000 is a smart pot and the smart pot is placed in a cooking zone in the lower left corner, the heating apparatus 2000 may display an icon image of the smart pot in the lower left corner of the GUI. According to another embodiment of the disclosure, the heating apparatus 2000 may also output the information (location information regarding the cooking appliance 1000) regarding the first cooking zone in which the cooking appliance 1000 is located by speech through the sound output unit.

In the case of a general induction range, a user needs to check a type of the cooking appliance 1000 and a location of a burner on which the cooking appliance 1000 is placed, and input the type of the cooking appliance 1000 through an operation interface for the burner, and then input a specific operation, and thus, user convenience is reduced. However, according to an embodiment of the disclosure, when the user places the cooking appliance 1000 on any cooking zone and presses a power button, the heating apparatus 2000 by itself identifies and displays identification information regarding the cooking appliance 1000 and the location of the cooking zone in which the cooking appliance 1000 is placed, and accordingly, user convenience is enhanced. Also, according to an embodiment of the disclosure, even when the user places the cooking appliance 1000 on the first cooking zone or moves the cooking appliance 1000 placed on the first cooking zone to the second cooking zone while the power is on, the heating apparatus 2000 by itself may identify and display the identification information regarding the cooking appliance 1000 and the location of the cooking zone in which the cooking appliance 1000 is placed.

Hereinafter, an operation in which the heating apparatus 2000 outputs a notification when the location information regarding the cooking appliance 1000 is not received while the heating apparatus 2000 operates in the cooking zone determination mode is described with reference to FIG. 8.

FIG. 8 is a flowchart for describing a method by which a heating apparatus outputs a notification to check a location of a cooking appliance, according to an embodiment of the disclosure.

In operation S810, according to an embodiment of the disclosure, the heating apparatus 2000 may transmit preset first level of power to the cooking appliance 1000 to detect a second type of cooking appliance 1000b (a small appliance) capable of performing communication. In this case, the heating apparatus 2000 may operate in the small appliance detection mode. The first level of power is power for driving the communication interface 1030 of the cooking appliance 1000 and may be, for example, about 100 W to about 300 W.

In operation S820, according to an embodiment of the disclosure, when the cooking appliance 1000 receives the first level of power from the heating apparatus 2000, the cooking appliance 1000 may activate the communication interface 1030 and transmit a first wireless communication signal. For example, the cooking appliance 1000 may advertise the first wireless communication signal including a first packet at a certain interval by using short-range wireless communication (e.g., Bluetooth or BLE).

In operation S830, according to an embodiment of the disclosure, when the heating apparatus 2000 receives the first wireless communication signal transmitted from the communication interface 1030 of the cooking appliance 1000, the heating apparatus 2000 may transmit power through a plurality of cooking zones according to a plurality of different power transmission patterns.

According to an embodiment of the disclosure, the first packet included in the first wireless communication signal transmitted from the cooking appliance 1000 may not include location information regarding the cooking appliance 1000. In this case, the heating apparatus 2000 may not accurately identify on which cooking zone the cooking appliance 1000 is located. Accordingly, in order to identify the location of the cooking appliance 1000, the heating apparatus 2000 may control the inverter circuit 2113 to output power according to different power transmission patterns for respective cooking zones. For example, when the heating apparatus 2000 includes three cooking zones, the heating apparatus 2000 may control the inverter circuit 2113 to output power according to a first power transmission pattern through a first working coil corresponding to a first cooking zone, output power according to a second power transmission pattern through a second working coil corresponding to a second cooking zone, and output power according to a third power transmission pattern through a third working coil corresponding to a third cooking zone.

According to an embodiment of the disclosure, when the second type of cooking appliance 1000b (a small appliance) is available only in some of the plurality of cooking zones, the heating apparatus 2000 may output power according to a specific power transmission pattern only in some cooking zones. For example, when the heating apparatus 2000 includes three cooking zones, but the second type of cooking appliance 1000b is available only in the first cooking zone and the third cooking zone, the heating apparatus 2000 may control the inverter circuit 2113 to output power according to the first power transmission pattern through the first working coil corresponding to the first cooking zone, output power according to the third power transmission pattern through the third working coil corresponding to the third cooking zone, and not to output power through the second working coil corresponding to the second cooking zone.

Because operation S830 corresponds to operation S520 of FIG. 5, this will not be described repeatedly.

In operation S840, according to an embodiment of the disclosure, the cooking appliance 1000 may transmit a second wireless communication signal including identification information regarding the cooking appliance 1000. In this case, when the cooking appliance 1000 detects the specific power transmission pattern, the cooking appliance 1000 may transmit, to the heating apparatus 2000, information regarding a cooking zone corresponding to the specific power transmission pattern as location information regarding the cooking appliance 1000, together with the identification information regarding the cooking appliance 1000. For example, the heating apparatus 2000 may advertise a second packet including the location information regarding the cooking appliance 1000 and the identification information regarding the cooking appliance 1000. In contrast, when the cooking appliance 1000 does not detect the specific power transmission pattern, the cooking appliance 1000 may advertise, at a certain interval, a second packet that does not include the location information regarding the cooking appliance 1000 but only includes the identification information regarding the cooking appliance 1000.

In operation S850, according to an embodiment of the disclosure, the heating apparatus 2000 may identify whether the second wireless communication signal includes the location information regarding the cooking appliance 1000. For example, the heating apparatus 2000 may determine whether the second packet received from the cooking appliance 1000 includes information regarding a cooking zone in which the cooking appliance 1000 is located.

In operation S860, according to an embodiment of the disclosure, when the second wireless communication signal does not include the location information regarding the cooking appliance 1000, the heating apparatus 2000 may output a notification to check the location of the cooking appliance 1000.

When the heating apparatus 2000 receives the second wireless communication signal but the second wireless communication signal does not include the location information regarding the cooking appliance 1000, it may be seen that, though the cooking appliance 1000 is the second type of cooking appliance 1000b (a small appliance) capable of performing communication, the cooking appliance 1000 is incorrectly placed and thus unable to detect the specific power transmission pattern. Accordingly, the heating apparatus 2000 may output a notification to check the location of the cooking appliance 1000. For example, when an area in which the cooking appliance 1000 is placed overlaps a part of the first cooking zone, the cooking appliance 1000 may be unable to accurately detect the first power transmission pattern corresponding to the first cooking zone.

According to an embodiment of the disclosure, the heating apparatus 2000 may display the notification to check the location of the cooking appliance 1000 on the display unit, or may output the notification by speech. After the heating apparatus 2000 outputs the notification to check the location of the cooking appliance 1000, the heating apparatus 2000 may return to operation S830 to transmit power again through the plurality of cooking zones according to the plurality of different power transmission patterns.

In operation S870, according to an embodiment of the disclosure, when the second wireless communication signal includes the location information regarding the cooking appliance 1000, the heating apparatus 2000 may output information regarding the first cooking zone in which the cooking appliance 1000 is located, and the identification information regarding the cooking appliance 1000. For example, the heating apparatus 2000 may display that the cooking appliance 1000 is located in the first cooking zone, by displaying the identification information regarding the cooking appliance 1000 on the GUI in an area displaying a power level of the first cooking zone. Because operation S870 corresponds to operation S540 of FIG. 5, this will not be described repeatedly.

In operation S880, according to an embodiment of the disclosure, the heating apparatus 2000 may operate in a power transmission standby mode. For example, when the heating apparatus 2000 receives, from the cooking appliance 1000, the second wireless communication signal including the information regarding the first cooking zone and the identification information regarding the cooking appliance 1000, the heating apparatus 2000 may operate in the power transmission standby mode for transmitting power to the cooking appliance 1000 through the first cooking zone.

According to an embodiment of the disclosure, the power transmission standby mode may be a mode to stand by for a user input indicating power transmission to the cooking appliance 1000. The user input indicating power transmission to the cooking appliance 1000 may include various types of inputs, such as an input for pressing an operation button, an input for selecting a menu, an input for adjusting temperature, an input for selecting a specific recipe, an input for selecting a power level, etc.

In addition, in the power transmission standby mode, the heating apparatus 2000 may continuously transmit, to the cooking appliance 1000, the first level of power for maintaining driving of the communication interface 1030 of the cooking appliance 1000.

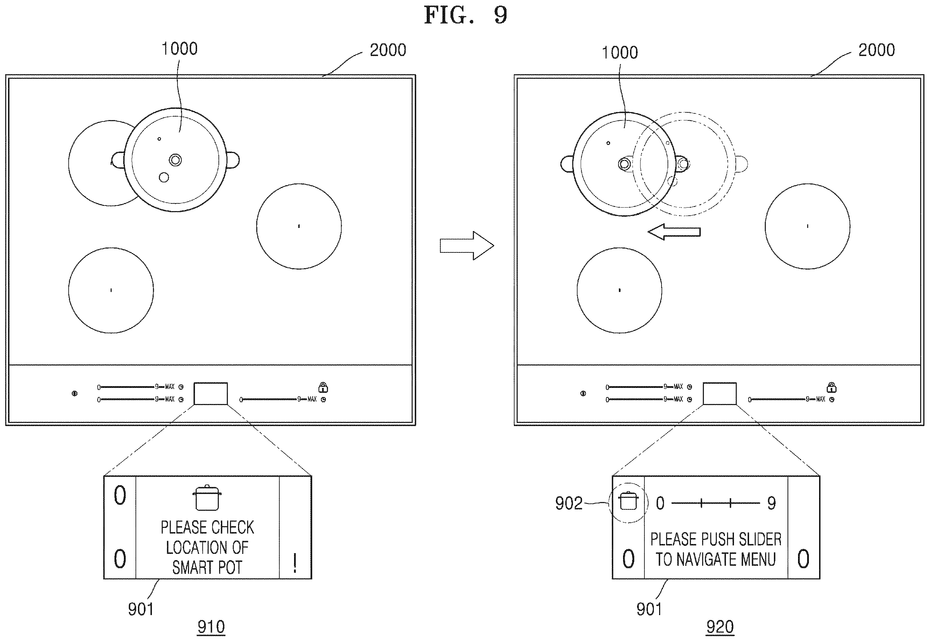

Hereinafter, an operation in which the heating apparatus 2000 outputs a notification when the location information regarding the cooking appliance 1000 is not received while the heating apparatus 2000 operates in the cooking zone determination mode is described in a little more detail with reference to FIG. 9.

FIG. 9 is a diagram for describing an operation in which a heating apparatus outputs a notification to check a location of a cooking appliance, according to an embodiment of the disclosure. In FIG. 9, a case in which the cooking appliance 1000 is a smart pot capable of communicating with the heating apparatus 2000 is described as an example.

Referring to 910 of FIG. 9, in order to identify the location of the cooking appliance 1000, the heating apparatus 2000 may output power according to different power transmission patterns for respective cooking zones. For example, the heating apparatus 2000 may output power according to a first power transmission pattern through a cooking zone in the upper left corner, output power according to a second power transmission pattern through a cooking zone in the lower left corner, and output power according to a third power transmission pattern through a cooking zone on the right side.

In this case, because the cooking appliance 1000 is located between the cooking zone in the upper left corner and the cooking zone on the right side, the cooking appliance 1000 may be unable to accurately detect the first power transmission pattern and the third power transmission pattern. In this case, the cooking appliance 1000 may advertise a second packet without inserting location information regarding the cooking appliance 1000.

When the location information regarding the cooking appliance 1000 is not inserted into the second packet, the heating apparatus 2000 that has received the second packet may output, to a user, a notification to check the location of the cooking appliance 1000. For example, the heating apparatus 2000 may output a notification 901 saying "Please check the location of the smart pan (or also referred to as the smart pot)".

Referring to 920 of FIG. 9, after the user checks the notification 901, the user may accurately place the cooking appliance 1000 in the cooking zone in the upper left corner. In this case, the cooking appliance 1000 may detect the first power transmission pattern by analyzing a voltage output from the rectifier. In addition, based on a plurality of pre-stored power transmission patterns of the heating apparatus 2000, the cooking appliance 1000 may identify that a cooking zone that outputs the first power transmission pattern is the cooking zone in the upper left corner.

The cooking appliance 1000 may transmit, to the heating apparatus 2000, location information indicating that the cooking appliance 1000 is located in the cooking zone in the upper left corner, together with identification information. In this case, the heating apparatus 2000 may display that the cooking appliance 1000 is located in the cooking zone in the upper left corner, by displaying an icon 902 indicating identification information regarding the cooking appliance 1000 in the upper left corner. Also, the heating apparatus 2000 may provide a GUI (e.g., "Please push the slider to navigate the menu") corresponding to the identification information regarding the cooking appliance 1000.

FIGS. 10A and 10B are flowcharts for describing a method by which a heating apparatus detects a type of a cooking appliance, according to an embodiment of the disclosure.

In operation S1001, according to an embodiment of the disclosure, the heating apparatus 2000 may receive a user input. The user input may be an input for pressing a power button of the heating apparatus 2000.

In operation S1002, according to an embodiment of the disclosure, in response to receipt of the user input, the heating apparatus 2000 may wirelessly transmit power for detecting an IH container including a magnetic material (an IH metal). In this case, the heating apparatus 2000 may operate in the IH container detection mode. For example, the heating apparatus 2000 may control the inverter circuit 2113 to transmit power for detecting the IH container to the cooking appliance 1000. The heating apparatus 2000 may wirelessly transmit power at regular intervals. In this case, a power transmission interval may be changed according to system settings.

According to an embodiment of the disclosure, power output to detect the IH container may be a small amount of power that is less than a threshold value (e.g., 100 W). When the cooking appliance 1000 approaches the heating apparatus 2000, a current value (inductance) of the working coil 2120 may be changed. Accordingly, in order to detect a change in the current value (inductance) of the working coil 2120, the heating apparatus 2000 may control the inverter circuit 2113 to output power for detecting the cooking appliance 1000 through the working coil 2120 every preset time.

In operations S1003 and S1004, the heating apparatus 2000 may monitor current values of a plurality of working coils and detect a cooking appliance 1000 including a magnetic material. For example, based on changes in the current values (inductances) of the plurality of working coils due to the approach of the cooking appliance 1000 including the magnetic material, the heating apparatus 2000 may determine whether the cooking appliance 1000 is located on the top plate of the heating apparatus 2000.

An inductance of the working coil 2120 when the cooking appliance 1000 is located on the top plate of the heating apparatus 2000 is different from an inductance of the working coil 2120 when the cooking appliance 1000 is not located on the top plate of the heating apparatus 2000. For example, a first inductance when the cooking appliance 1000 is located on the top plate is greater than a second inductance when the cooking appliance 1000 is not located on the top plate. The inductance of the working coil 2120 is proportional to the magnetic permeability of a medium in the vicinity (especially, at the center of a coil), and this is because, in general, the magnetic permeability of the cooking appliance 1000 is greater than the permeability of air.

Also, a magnitude of a first AC flowing through the working coil 2120 when the cooking appliance 1000 is located on the top plate is less than a magnitude of a second AC flowing through the working coil 2120 when the cooking appliance 1000 is not located on the top plate. Accordingly, the heating apparatus 2000 may detect that the cooking appliance 1000 is located on the top plate of the heating apparatus 2000, by measuring a magnitude of an AC flowing through the working coil 2120 using the current sensor, and comparing the measured magnitude of the AC with a reference current magnitude. For example, when a measured current value is less than a reference current value, the heating apparatus 2000 may determine that the cooking appliance 1000 is located on the top plate of the heating apparatus 2000.

In addition, according to another embodiment of the disclosure, the heating apparatus 2000 may detect the cooking appliance 1000 including the magnetic material, by measuring a frequency and a phase of the AC flowing through the working coil 2120.

In operation S1005, after the heating apparatus 2000 detects the cooking appliance 1000 including the magnetic material, the heating apparatus 2000 may transmit preset first level of power to the cooking appliance 1000 to detect a second type of cooking appliance 1000b (a small appliance) capable of performing communication. In this case, the heating apparatus 2000 may operate in the small appliance detection mode. The first level of power is power for driving the communication interface 1030 of the cooking appliance 1000 and may be, for example, about 100 W to about 300 W. The heating apparatus 2000 may control the inverter circuit 2113 so that a current corresponding to the first level of power flows through the working coil 2120.

According to an embodiment of the disclosure, the cooking appliance 1000 may receive the first level of power transmitted from the heating apparatus 2000 and supply power to the PCB 1005 through the pickup coil 1001. In this case, the power supply 1010, the controller 1020, and the communication interface 1030 mounted on the PCB 1005 may be driven.

In operations S1006 and S1007, when the heating apparatus 2000 does not receive the first wireless communication signal from the cooking appliance 1000 including the magnetic material, the heating apparatus 2000 may identify the cooking appliance 1000 as a first type of cooking appliance 1000a. For example, when the heating apparatus 2000 does not receive the first wireless communication signal within a certain time after the first level of power is transmitted, the heating apparatus 2000 may identify the cooking appliance 1000 as a 'general IH container (the first type of cooking appliance 1000a), which is detected in the IH container detection mode but not detected in the small appliance detection mode.

In operation S1008, when the cooking appliance 1000 is the first type of cooking appliance 1000a, the heating apparatus 2000 may identify a cooking zone in which the first type of cooking appliance 1000a is located, based on the changes in the current values (inductances) of the plurality of working coils. For example, when a magnitude of an AC flowing through a first working coil among the plurality of working coils is less than the reference current magnitude, the heating apparatus 2000 may determine that the first type of cooking appliance 1000a is located in a first cooking zone corresponding to the first working coil.

In operation S1009, when the heating apparatus 2000 receives the first wireless communication signal from the cooking appliance 1000 including the magnetic material, the heating apparatus 2000 may identify the cooking appliance 1000 as a second-first type of cooking appliance 1000b-1. For example, when the heating apparatus 2000 receives the first wireless communication signal within a certain time after the first level of power is transmitted, the heating apparatus 2000 may identify the cooking appliance 1000 as a 'small appliance including an IH metal', which is detected in both the IH container detection mode and the small appliance detection mode.

In operation S1010, even though the cooking appliance 1000 including the magnetic material is not detected, the heating apparatus 2000 may transmit preset first level of power to the cooking appliance 1000 to drive the communication interface 1030 of the cooking appliance 1000. In this case, the heating apparatus 2000 may operate in the small appliance detection mode. The first level of power is power for driving the communication interface 1030 of the cooking appliance 1000 and may be, for example, about 100 W to about 300 W.

In operations S1011 and 1012, when the first wireless communication signal is received from the cooking appliance 1000, the heating apparatus 2000 may identify the cooking appliance 1000 as a second-second type of cooking appliance 1000b-2. For example, when the heating apparatus 2000 receives the first wireless communication signal within a certain time after the first level of power is transmitted, the heating apparatus 2000 may identify the cooking appliance 1000 as a 'small appliance including an IH metal', which is not detected in the IH container detection mode but is detected in the small appliance detection mode.

In operation S1013, when the first wireless communication signal is not received from the cooking appliance 1000, the heating apparatus 2000 may output a notification that the cooking appliance 1000 is unusable or there is no cooking appliance 1000. For example, when the heating apparatus 2000 does not receive the first wireless communication signal within a certain time after the first level of power is transmitted, there is no cooking appliance 1000 detected in both the IH container detection mode and the small appliance detection mode, and thus, the heating apparatus 2000 may output a notification that the cooking appliance 1000 is unusable or there is no cooking appliance 1000. In this case, the notification may be display on the display unit or may be output by speech through the sound output unit.

According to an embodiment of the disclosure, referring to 1000_1 of FIG. 10A, in operation S1014, when the cooking appliance 1000 is identified as a second type of cooking appliance 1000b (e.g., the second-first type of cooking appliance 1000b-1 or the second-second type of cooking appliance 1000b-2) capable of performing communication, the heating apparatus 2000 may operate in the cooking zone determination mode for determining a cooking zone in which the cooking appliance 1000 is located.

According to an embodiment of the disclosure, when the heating apparatus 2000 receives the first wireless communication signal transmitted from the communication interface 1030 of the cooking appliance 1000, in order to determine a cooking zone in which the cooking appliance 1000 is located, the heating apparatus 2000 may transmit power through a plurality of cooking zones according to a plurality of different power transmission patterns. For example, when the heating apparatus 2000 includes three cooking zones, the heating apparatus 2000 may control the first inverter circuit to output power according to a first power transmission pattern through a first working coil corresponding to a first cooking zone, control the second inverter circuit to output power according to a second power transmission pattern through a second working coil corresponding to a second cooking zone, and control a third inverter circuit to output power according to a third power transmission pattern through a third working coil corresponding to a third cooking zone.

When the cooking appliance 1000 detects a specific power transmission pattern among the plurality of power transmission patterns, the cooking appliance 1000 may transmit, to the heating apparatus 2000, information regarding a cooking zone corresponding to the specific power transmission pattern, together with identification information regarding the cooking appliance 1000. The heating apparatus 2000 may identify whether the second wireless communication signal includes location information regarding the cooking appliance 1000. For example, the heating apparatus 2000 may determine whether a second packet received from the cooking appliance 1000 includes information regarding the cooking zone in which the cooking appliance 1000 is located.

Because operation S1014 corresponds to operations S830 to S850, this will not be described repeatedly.

In addition, according to another embodiment of the disclosure, referring to 1000_2 of FIG. 10B, when the cooking appliance 1000 is identified as the second-second type of cooking appliance 1000b-2, the heating apparatus 2000 may operate in the cooking zone determination mode (operation S1014), and when the cooking appliance 1000 is identified as the second-first type of cooking appliance 1000b-1, the operation in the cooking zone determination mode may be omitted. In operation S1015, when the cooking appliance 1000 is identified as the second-first type of cooking appliance 1000b-1, the heating apparatus 2000 may identify a cooking zone in which the second-first type of cooking appliance 1000b-1 is located, based on the changes in the current values (inductances) of the plurality of working coils. For example, when a magnitude of an AC flowing through a second working coil among the plurality of working coils is less than the reference current magnitude, the heating apparatus 2000 may determine that the second-first type of cooking appliance 1000b-1 is located in a second cooking zone (a cooking zone in the lower left corner) corresponding to the second working coil.

In operation S1016, when the heating apparatus 2000 identifies, based on the changes in the current values (inductances) of the plurality of working coils, the cooking zone in which the second-first type of cooking appliance 1000b-1 is located, the heating apparatus 2000 may transmit, to the second-first type of cooking appliance 1000b-1, information regarding the cooking zone in which the second-first type of cooking appliance 1000b-1 is located. For example, the heating apparatus 2000 may transmit, to the second-first type of cooking appliance 1000b-1, information indicating that the second-first type of cooking appliance 1000b-1 is located in the second cooking zone (the cooking zone in the lower left corner), through short-range wireless communication.

That is, referring to FIG. 10B, when the heating apparatus 2000 detects a cooking appliance 1000 (e.g., the first type of cooking appliance 1000a or the second-first type of cooking appliance 1000b-1) including a magnetic material, the heating apparatus 2000 may identify a cooking zone in which the cooking appliance 1000 including the magnetic material is located, based on the changes in the current values of the plurality of working coils, and thus, an operation (the cooking zone determination mode) of outputting different power transmission patterns for respective cooking zones may be omitted.

In operation S1017, when the heating apparatus 2000 receives the information regarding the cooking zone in which the cooking appliance 1000 is located, from the cooking appliance 1000 (e.g., the second-first type of cooking appliance 1000b-1 or the second-second type of cooking appliance 1000b-2), the heating apparatus 2000 may output the information regarding the cooking zone in which the cooking appliance 1000 is located. Also, when the heating apparatus 2000 identifies the cooking zone in which the cooking appliance 1000 (e.g., the first type of cooking appliance 1000a or the second-first type of cooking appliance 1000b-1) is located, based on the changes in the current values (inductances) of the plurality of working coils, the heating apparatus 2000 may output the information regarding the cooking zone in which the cooking appliance 1000 is located.

According to an embodiment of the disclosure, when the cooking appliance 1000 is the first type of cooking appliance 1000a, the heating apparatus 2000 may output information regarding a cooking zone in which the first type of cooking appliance 1000a is located, by displaying a power level of the cooking zone in which the first type of cooking appliance 1000a is located.

According to an embodiment of the disclosure, when the cooking appliance 1000 is the second type of cooking appliance 1000b, the heating apparatus 2000 may output information regarding a cooking zone in which the second type of cooking appliance 1000b is located, by displaying an identification image (e.g., an icon image) of the second type of cooking appliance 1000b in an area displaying a power level of the cooking zone in which the second type of cooking appliance 1000b is located.

In operation S1018, the heating apparatus 2000 may receive an operation command for the cooking appliance 1000 from a user. The operation command for the cooking appliance 1000 may be a command that indicates the cooking appliance 1000 to perform an original function thereof. For example, when the cooking appliance 1000 is a coffee machine, the heating apparatus 2000 may receive a user command to start brewing coffee, and when the cooking appliance 1000 is a smart pot, the heating apparatus 2000 may also receive a command to automatically cook (e.g., porridge). Also, when the cooking appliance 1000 is a general IH container, the heating apparatus 2000 may receive a user command to start heating.

In operation S1019, the heating apparatus 2000 may transmit, to the cooking appliance 1000, second level of power for operating the cooking appliance 1000 according to the operation command. For example, the heating apparatus 2000 may control the inverter circuit 2113 to apply an AC corresponding to the second level of power to the working coil 2120. The second level of power may be power for driving a load (e.g., a heater or a motor) of the cooking appliance 1000 or heating contents inside the cooking appliance 1000. The second level of power may be greater than 800 W, but is not limited thereto.

In addition, the first level of power (low power) is to drive the communication interface 1030 of the cooking appliance 1000 and may be lower than the second level of power (high power) for actually operating the cooking appliance 1000.

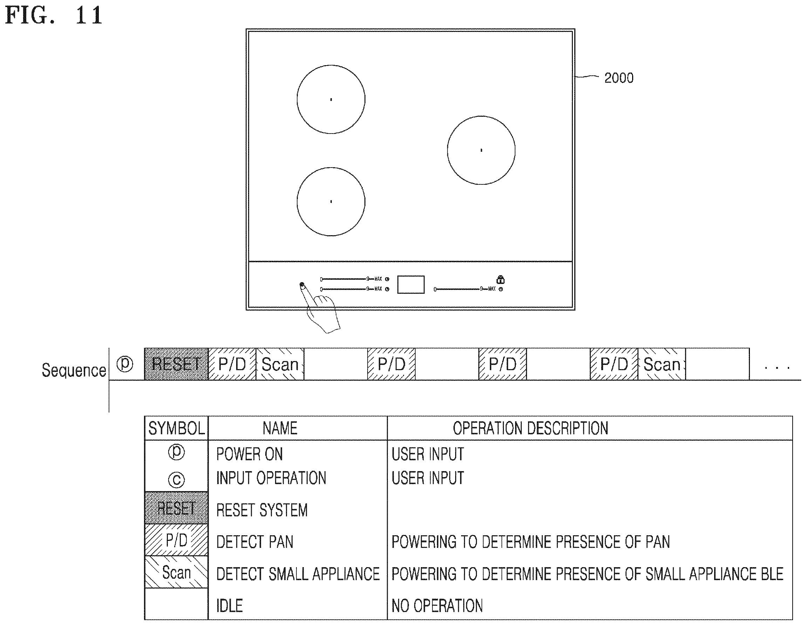

Hereinafter, operations S1002 to S1004 may be defined as IH container detection operations, and operations S1005, S1006, and S1009 to S1012 may be defined as small appliance (small object) detection operations. The first type of cooking appliance 1000a and the second-first type of cooking appliance 1000b-1 each including the magnetic material may be detected by an IH container detection operation of the heating apparatus 2000, and the second-first type of cooking appliance 1000b-1 and the second-second type of cooking appliance 1000b-2 each including the communication interface 1030 may be detected by a small appliance detection operation of the heating apparatus 2000. Hereinafter, the IH container detection operation (hereinafter, also referred to as a pan detection operation) and the small appliance detection operation (hereinafter, also referred to as a small object detection operation) of the heating apparatus 2000 are described in a little more detail with reference to FIGS. 11 to 14.

FIG. 11 is a diagram for describing an operation in which a heating apparatus detects a cooking appliance, according to an embodiment of the disclosure.

Referring to FIG. 11, when a user turns on the heating apparatus 2000 while the cooking appliance 1000 is not placed on the heating apparatus 2000, the heating apparatus 2000 may reset a system and perform an IH container detection operation (a pan detection operation) first, and then perform a small appliance detection operation (a small object detection operation). In this case, an interval in which the IH container detection operation is performed may be shorter than an interval in which the small appliance detection operation is performed. For example, the heating apparatus 2000 may perform the IH container detection operation once per second and perform the small appliance detection operation once every 3 seconds.

According to an embodiment of the disclosure, when the heating apparatus 2000 does not detect any cooking appliance 1000 by the IH container detection operation and the small appliance detection operation, the heating apparatus 2000 may output a notification "Cooking appliance is unusable or there is no cooking appliance".

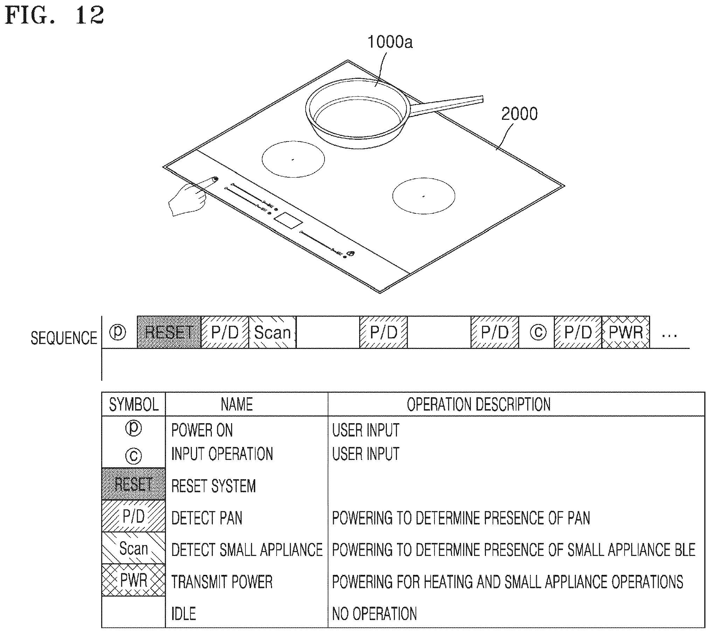

FIG. 12 is a diagram for describing an operation performed by a heating apparatus when a first type of cooking appliance (a general IH container) is placed on a heating apparatus, according to an embodiment of the disclosure.

Referring to FIG. 12, when a user turns on the heating apparatus 2000 while the first type of cooking appliance 1000a (a general IH container) is placed on the top plate, the heating apparatus 2000 may reset a system and perform an IH container detection operation (pan detection operation). In this case, because the first type of cooking appliance 1000a includes a magnetic material, the heating apparatus 2000 may identify that the first type of cooking appliance 1000a is located in a cooking zone in the upper left corner. In addition, the IH container detection operation (a pan detection operation) may be continuously maintained at a certain interval.

According to an embodiment of the disclosure, the heating apparatus 2000 may perform a small appliance detection operation (a small object detection operation). In this case, because the first type of cooking appliance 1000a does not include a communication interface, the heating apparatus 2000 may not receive a wireless communication signal from the first type of cooking appliance 1000a. When the heating apparatus 2000 does not receive a wireless communication signal from the first type of cooking appliance 1000a for a certain time, the heating apparatus 2000 may no longer perform the small appliance detection operation (the small object detection operation) and may operate in the power transmission standby mode.

According to an embodiment of the disclosure, when an operation (e.g., selecting a heating start button or selecting a power level) for the first type of cooking appliance 1000a is input by a user while the heating apparatus 2000 operates in the power transmission standby mode, the heating apparatus 2000 may transmit power for heating contents inside the first type of cooking appliance 1000a.

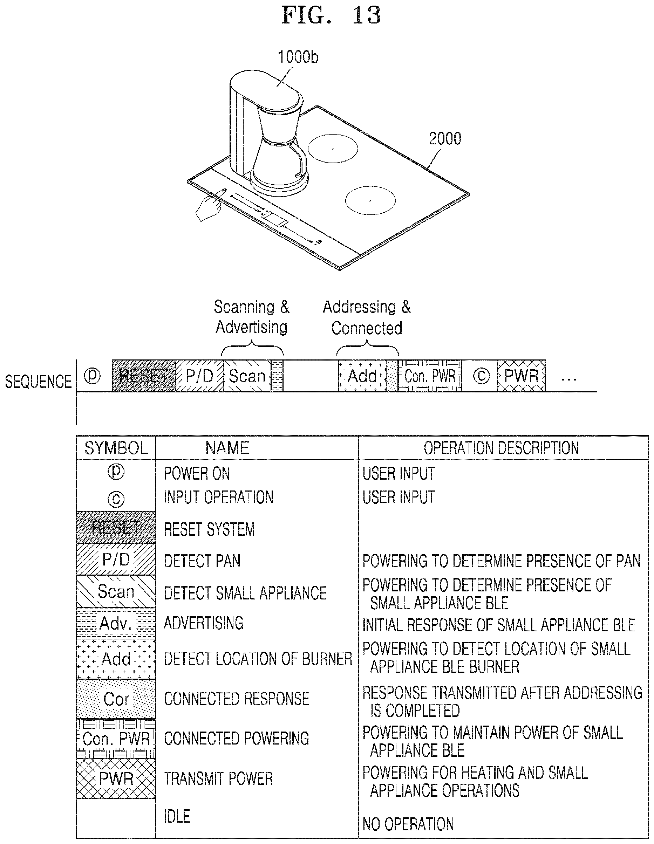

FIG. 13 is a diagram for describing an operation performed by a heating apparatus when a second type of cooking appliance (a small appliance) is placed on a heating apparatus, according to an embodiment of the disclosure.

Referring to FIG. 13, when a user turns on the heating apparatus 2000 while the second type of cooking appliance 1000b is placed on the top plate, the heating apparatus 2000 may reset a system and perform an IH container detection operation (a pan detection operation). In this case, when the second type of cooking appliance 1000b is the second-first type of cooking appliance 1000b-1 including a magnetic material, the heating apparatus 2000 may detect, by using the current sensor, that the second-first type of cooking appliance 1000b-1 is placed on the top plate. In addition, when the second type of cooking appliance 1000b is the second-second type of cooking appliance 1000b-2 including the reception coil 1003, the heating apparatus 2000 may not detect, by using the current sensor, that the second-second type of cooking appliance 1000b-2 is placed on the top plate.

The heating apparatus 2000 may perform a small appliance detection operation (a small object detection operation) after the IH container detection operation. For example, the heating apparatus 2000 may transmit first level of power to the second type of cooking appliance 1000b to drive the communication interface 1030 of the second type of cooking appliance 1000b and may operate in a scan mode. When the cooking appliance 1000b receives the first level of power, the second type of cooking appliance 1000b may drive the communication interface 1030 and advertise a first packet. The heating apparatus 2000 operating in the scan mode may identify that the second type of cooking appliance 1000b is placed on the top plate, by receiving the first packet advertised by the second type of cooking appliance 1000b.

However, when the first packet does not include information regarding a cooking zone in which the second type of cooking appliance 1000b is located, the heating apparatus 2000 may operate in the cooking zone determination mode to identify the location of the second type of cooking appliance 1000b. For example, the heating apparatus 2000 may output (e.g., address) power according different power transmission patterns for respective cooking zones. In this case, because the second type of cooking appliance 1000b is placed on a cooking zone in the lower left corner, a specific power transmission pattern corresponding to the cooking zone in the lower left corner may be detected. The second type of cooking appliance 1000b may identify that the second type of cooking appliance 1000b is located in the cooking zone in the lower left corner, by comparing the specific power transmission pattern with a plurality of pre-stored power transmission patterns of the heating apparatus 2000. In this case, the second type of cooking appliance 1000b may transmit (e.g., advertise), to the heating apparatus 2000, a second packet including information that the second type of cooking appliance 1000b is located in the cooking zone in the lower left corner, and identification information. In this case, the second packet may further include communication connection information.

The heating apparatus 2000 may perform communication connection with the second type of cooking appliance 1000b based on the communication connection information included in the second packet. When the heating apparatus 2000 has been previously paired with the second type of cooking appliance 1000b, the communication connection information may include pairing information. According to an embodiment of the disclosure, the heating apparatus 2000 may establish a short-range wireless communication channel (e.g., a Bluetooth communication channel or a BLE communication channel) with the second type of cooking appliance 1000b. When the Bluetooth communication channel is established, it may refer to causing the second type of cooking appliance 1000b and the heating apparatus 2000 to be in a state in which data may be transmitted/received through a Bluetooth communication method. The BLE communication channel may be a non-connected virtual communication channel for transmitting/receiving advertising packets through mutual scanning between the second type of cooking appliance 1000b and the heating apparatus 2000, or may be a connected communication channel in which a session is formed by a BLE connection request of the heating apparatus 2000.

When the heating apparatus 2000 is connected to the second type of cooking appliance 1000b via communication, the heating apparatus 2000 may control the inverter circuit 2113 to transmit first level of power for maintaining the communication connection with the second type of cooking appliance 1000b to the pickup coil 1001 ( 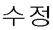 ) of the second type of cooking appliance 1000b. In this case, when an operation command (e.g., start brewing coffee, start automatic cooking, heat, or keep warm) for the second type of cooking appliance 1000b is received from a user, the heating apparatus 2000 may control the inverter circuit 2113 to transmit, to the second type of cooking appliance 1000b, second level of power for operating the second type of cooking appliance 1000b. The second level of power may be power for driving a load (e.g., a heater, a motor, or a battery) of the second type of cooking appliance 1000b.

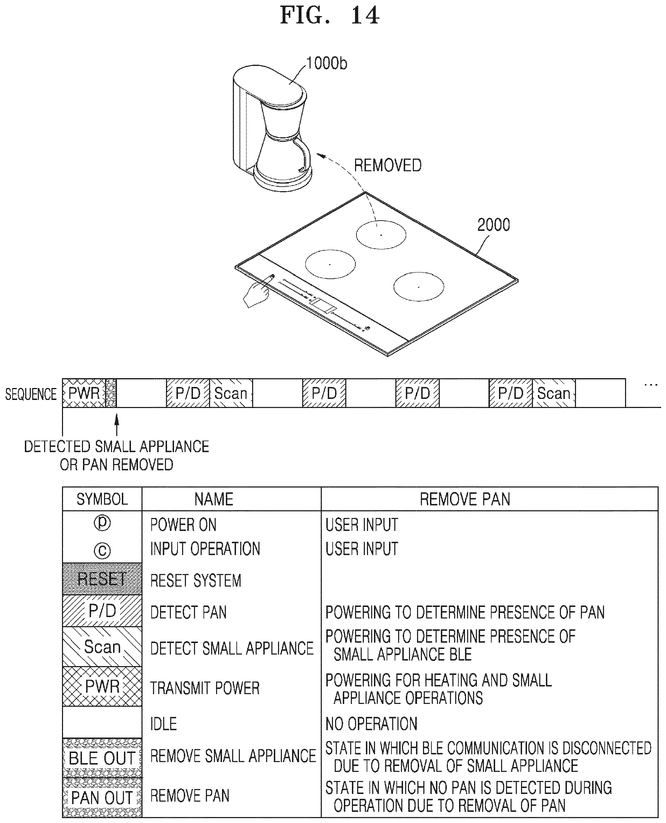

FIG. 14 is a diagram for describing an operation performed by a heating apparatus after a cooking appliance is removed from the heating apparatus, according to an embodiment of the disclosure.

Referring to FIG. 14, while the heating apparatus 2000 transmits second level of power for operation of the second type of cooking appliance 1000b, a user may remove the second type of cooking appliance 1000b from the top plate of the heating apparatus 2000. In this case, the heating apparatus 2000 may detect that the cooking appliance 1000 is removed from the top plate of the second type of cooking appliance 1000b, based on a change in a current value of the working coil 2120 detected by the current sensor and/or a change in a packet received from the communication interface 2300.

When the second type of cooking appliance 1000b is removed from the top plate, the heating apparatus 2000 may perform an IH container detection operation (a pan detection operation) and a small appliance detection operation (a small object detection operation) at a certain interval. For example, the heating apparatus 2000 may perform the IH container detection operation once per second and perform the small appliance detection operation once every 3 seconds.

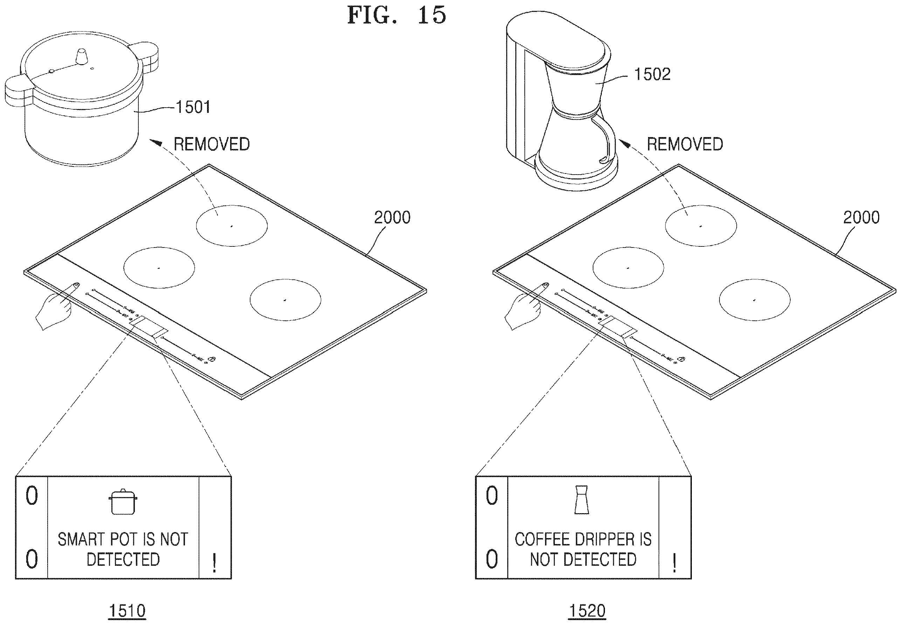

In addition, when the second type of cooking appliance 1000b is removed from the top plate, the heating apparatus 2000 may output a notification that the second type of cooking appliance 1000b is not detected. For example, referring to 1510 of FIG. 15, when a smart pot 1501 that is the second-first type of cooking appliance 1000b-1 is placed on the top plate and then removed, the heating apparatus 2000 may output a notification "Smart pot is not detected". Referring to 1520 of FIG. 15, when a coffee machine 1502 (or a coffee dripper) that is the second-second type of cooking appliance 1000b-2 is placed on the top plate, the heating apparatus 2000 may output a notification "Coffee dripper is not detected".

FIG. 16 is a flowchart for describing a method by which a heating apparatus provides a GUI according to identification information regarding a cooking appliance, according to an embodiment of the disclosure.

In operation S1610, according to an embodiment of the disclosure, the heating apparatus 2000 may receive a user input. The user input may be an input for pressing a power button of the heating apparatus 2000, but is not limited thereto.

In operation S1620, according to an embodiment of the disclosure, the heating apparatus 2000 may perform an IH container detection operation and a small appliance detection operation.

For example, the heating apparatus 2000 may detect the first type of cooking appliance 1000a and the second-first type of cooking appliance 1000b-1 each including a magnetic material, by sensing a current value of a working coil after power for detecting an IH container is transmitted. Also, the heating apparatus 2000 may detect the second type of cooking appliance 1000b (e.g., the second-first type of cooking appliance 1000b-1 and the second-second type of cooking appliance 1000b-2) capable of performing communication, by transmitting power for driving the communication interface 1030 of the cooking appliance 1000 and detecting a wireless communication signal transmitted from the cooking appliance 1000. In this case, the power for detecting the IH container may be less than the power for driving the communication interface 1030 of the cooking appliance 1000.

According to an embodiment of the disclosure, the heating apparatus 2000 may perform the IH container detection operation first and then perform the small appliance detection operation, or may perform the small appliance detection operation first and then perform the IH container detection operation. Also, the order of the operations may be determined by a user's selection. For example, when the user purchases the heating apparatus 2000 to mainly use the second type of cooking appliance 1000b (a small appliance) capable of performing communication, the user may set the heating apparatus 2000 to perform the small appliance detection operation first. The user may set the order of the IH container detection operation and the small appliance detection operation through the user interface 2500 of the heating apparatus 2000, or may set the order of the IH container detection operation and the small appliance detection operation through a mobile terminal connected to the heating apparatus 2000 with the same account.

In operations S1630 and S1640, when the cooking appliance 1000 located on the top plate may perform communication, the heating apparatus 2000 may identify the cooking appliance 1000 as the second type of cooking appliance 1000b (a small appliance).

In operation S1650, when the cooking appliance 1000 is identified as the second type of cooking appliance 1000b, the heating apparatus 2000 may provide a GUI corresponding identification information regarding the second type of cooking appliance 1000b (a small appliance). Because the second type of cooking appliance 1000b may include various types of small appliances, such as a kettle, a toaster, an electric rice cooker, a coffee machine, or a blender, the heating apparatus 2000 may provide various types of GUIs corresponding to identification information regarding the small appliance.

In operations S1630 and S1660, when the cooking appliance 1000 includes a magnetic material but is unable to perform communication, the heating apparatus 2000 may identify the cooking appliance 1000 located on the top plate of the heating apparatus 2000 as the first type of cooking appliance 1000a (a general IH container).

In operation S1670, when the cooking appliance 1000 is identified as the first type of cooking appliance 1000a, the heating apparatus 2000 may provide a GUI corresponding to the general IH container. For example, the heating apparatus 2000 may display an initial power level on the display unit at a location corresponding to a cooking zone in which the first type of cooking appliance 1000a is located, without displaying identification information corresponding to the first type of cooking appliance 1 000a. Also, the heating apparatus 2000 may output a notification that the general IH container is detected.

In operation S1680, the heating apparatus 2000 may provide a GUI corresponding to the cooking appliance 1000 and operate in the power transmission standby mode.

According to an embodiment of the disclosure, the power transmission standby mode may be a mode to stand by for a user input indicating power transmission to the cooking appliance 1000. The user input indicating power transmission to the cooking appliance 1000 may include various types of inputs, such as an input for pressing an operation button, an input for selecting a menu, an input for adjusting temperature, an input for selecting a specific recipe, an input for selecting a power level, etc.

In addition, when the cooking appliance 1000 is the second type of cooking appliance 1000b, the heating apparatus 2000 may continuously transmit, to the cooking appliance 1000, power for maintaining driving of the communication interface 1030 of the cooking appliance 1000 in the power transmission standby mode.

According to an embodiment of the disclosure, even though the user does not input the type of the cooking appliance 1000, the heating apparatus 2000 may identify the type of the cooking appliance 1000 that wirelessly received power, by simultaneously performing the IH container detection operation and the small appliance detection operation.

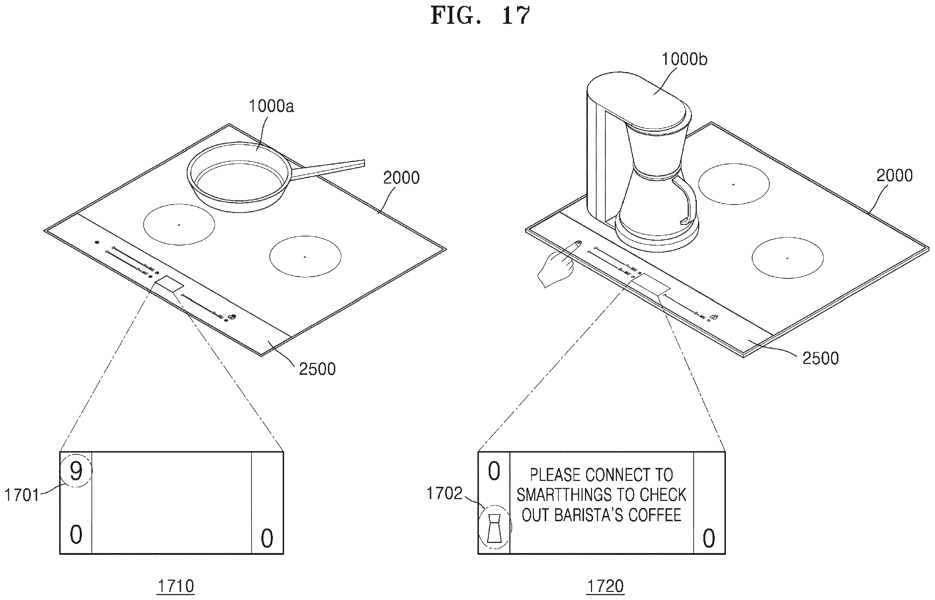

Hereinafter, an operation in which the heating apparatus 2000 outputs a GUI is described with reference to FIGS. 17 to 20.

FIG. 17 is a diagram for describing an operation in which a heating apparatus provides a GUI according to identification information regarding a cooking appliance, according to an embodiment of the disclosure.

Referring to 1710 of FIG. 17, when the heating apparatus 2000 detects the first type of cooking appliance 1000a placed on the top plate, the heating apparatus 2000 may display, on the user interface 2500, a location of the first type of cooking appliance 1000a and a power level 1701. For example, when the first type of cooking appliance 1000a is placed in a first cooking zone (a cooking zone in the upper left corner), the heating apparatus 2000 may output that the first type of cooking appliance 1000a is placed in the first cooking zone (the cooking zone in the upper left corner), by displaying the power level 1701 (e.g., 9) on the user interface 2500 at a location (the upper left corner) corresponding to the first cooking zone.

Referring to 1720 of FIG. 17, when the heating apparatus 2000 detects the second type of cooking appliance 1000b placed on a second cooking zone (a cooking zone in the lower left corner), the heating apparatus 2000 may display location information and identification information regarding the second type of cooking appliance 1000b on the user interface 2500. For example, when the second type of cooking appliance 1000b is a coffee machine, the heating apparatus 2000 may output that the coffee machine is located in the second cooking zone (the cooking zone in the lower left corner), by displaying an icon 1702 of the coffee machine at a location corresponding to the second cooking zone (the cooking zone in the lower left corner). Also, the heating apparatus 2000 may output a pre-stored notification (e.g., "Please connect to SmartThings to check out barista's coffee") related to the coffee machine.

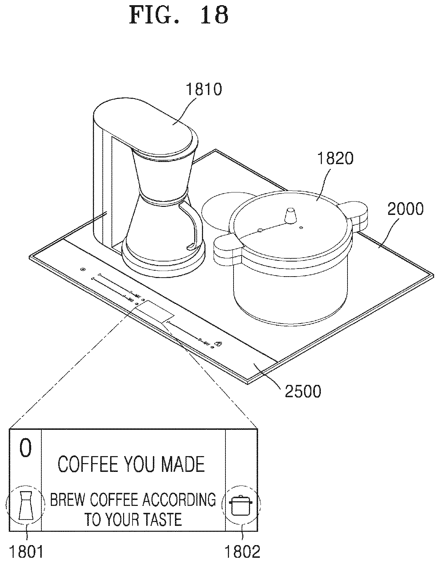

FIG. 18 is a diagram for describing an operation in which a heating apparatus displays identification information and location information regarding a plurality of cooking appliances, according to an embodiment of the disclosure.

Referring to FIG. 18, the heating apparatus 2000 may detect a plurality of cooking appliances placed on the top plate. For example, the heating apparatus 2000 may detect a coffee machine 1810 located in a second cooking zone (a cooking zone in the lower left corner) and a smart pot 1820 located in a third cooking zone (a cooking zone at the right center). In this case, the heating apparatus 2000 may receive, from the coffee machine 1810, identification information and location information (e.g., information regarding the second cooking zone) regarding the coffee machine 1810 through a small appliance detection operation. Also, the heating apparatus 2000 may receive, from the smart pot 1820, identification information and location information (e.g., information regarding the third cooking zone) regarding the smart pot 1820 through a small appliance detection operation.

When the coffee machine 1810 and the smart pot 1820 are detected, the heating apparatus 2000 may display, on the user interface 2500, the identification information and the location information regarding the coffee machine 1810, and the identification information and the location information regarding the smart pot 1820. For example, the heating apparatus 2000 may display an icon 1801 indicating the coffee machine 1810 in the lower left corner of the display unit and may display an icon 1802 indicating the smart pot 1820 in the lower right corner of the display unit.

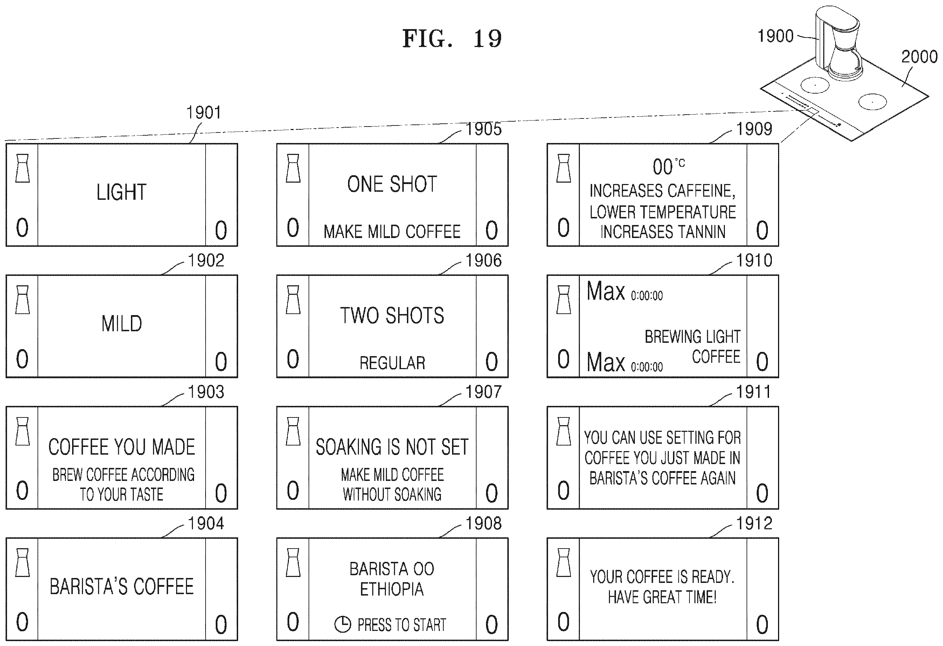

FIG. 19 is a diagram for describing an operation in which a heating apparatus provides a GUI corresponding to identification information regarding a cooking appliance, according to an embodiment of the disclosure. In FIG. 19, a case in which the cooking appliance 1000 is a coffee machine 1900 is described as an example.

Referring to FIG. 19, the heating apparatus 2000 may receive, from the coffee machine 1900 located in a cooking zone in the upper left corner, identification information and location information (e.g., information regarding a cooking zone in the upper left corner) regarding the coffee machine 1900 through a small appliance detection operation. In this case, the heating apparatus 2000 may display an icon indicating the coffee machine 1900 in the upper left corner of the display unit and may provide a GUI corresponding to the coffee machine 1900 to a user through the display unit.

For example, the heating apparatus 2000 may provide menu screens 1901, 1902, 1903, and 1904 for selecting types of coffee (e.g., light, mild, balanced, rich, intense, coffee you made, barista's coffee, etc.), screens 1905, 1906, and 1907 for selecting the number of coffee shots (e.g., one shot, two shots, three shots, etc.) and whether to soak coffee beans, a screen 1908 for selecting a specific barista, a screen 1909 for selecting a temperature, a screen 1910 indicating an operating state (e.g., brewing coffee, etc.), and screens 1911 and 1912 for outputting a notification (e.g., "You can use the **setting** for the coffee you just made in barista's coffee again", "Your coffee is ready", etc.).

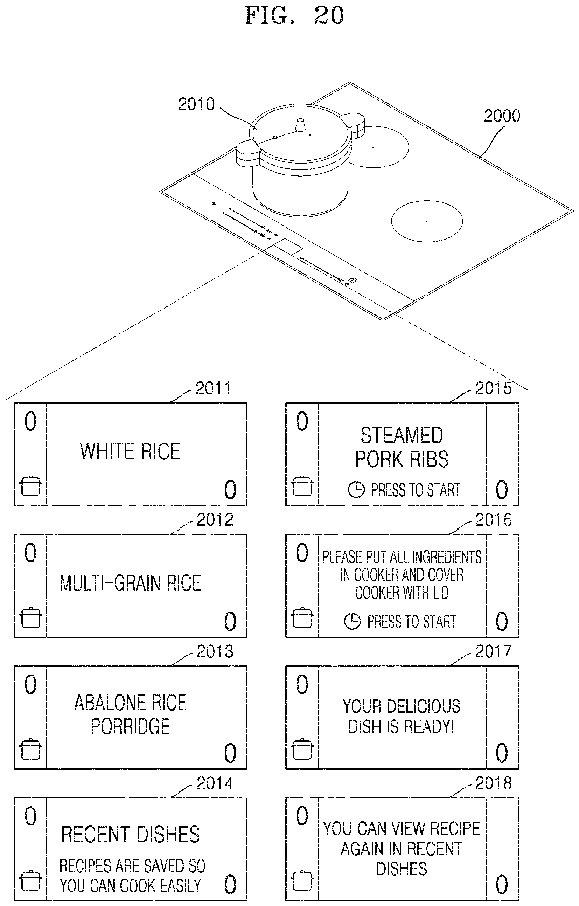

FIG. 20 is a diagram for describing an operation in which a heating apparatus provides a GUI corresponding to identification information regarding a cooking appliance (smart pot), according to an embodiment of the disclosure. In FIG. 20, a case in which the cooking appliance 1000 is a smart pot 2010 (cooker apparatus) is described as an example.

Referring to FIG. 20, the heating apparatus 2000 may receive, from the smart pot 2010 located in a cooking zone in the lower left corner, identification information and location information (e.g., information regarding the cooking zone in lower left corner) regarding the smart pot 2010 through a small appliance detection operation. In this case, the heating apparatus 2000 may display an icon indicating the smart pot 2010 in the lower left corner of the display unit and may provide a GUI corresponding to the smart pot 2010 to a user through the display unit.

For example, the heating apparatus 2000 may provide menu screens 2011 and 2012 for selecting types of rice (e.g., white rice, multi-grain rice, etc.), menu screens 2013, 2014, and 2015 for selecting dishes (e.g., abalone rice porridge, recent dishes, steamed pork ribs, etc.), a screen 2016 for providing recipe information (e.g., "Please put all ingredients in the cooker and cover the cooker with a lid"), and screens 2017 and 2018 for outputting a notification (e.g., "Your delicious dish is ready", "You can view the recipe again in recent dishes", etc.). According to an embodiment of the disclosure, the recipe information may be stored in a memory of the cooking appliance 1000 or may be stored in a server apparatus in which information regarding the cooking appliance 1000 is registered.

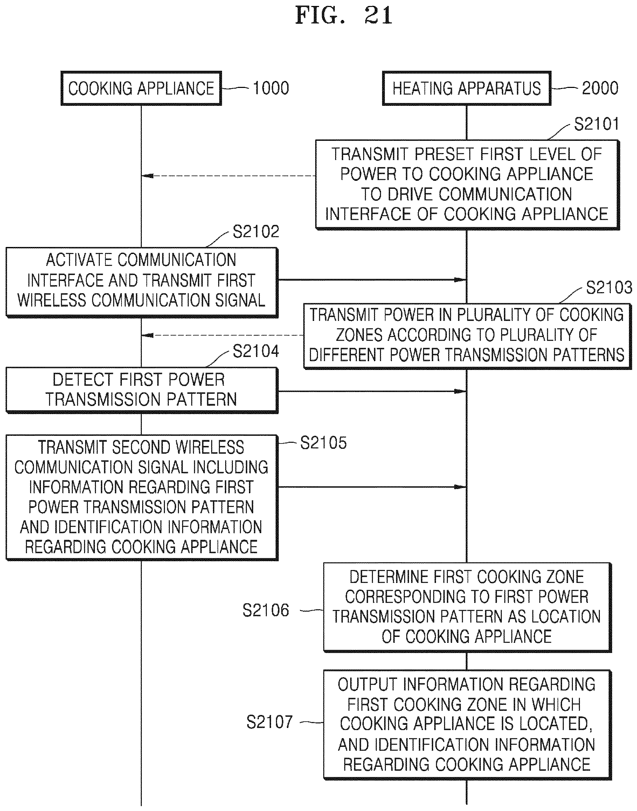

Hereinafter, an operation in which the heating apparatus 2000 receives information regarding a power transmission pattern detected by the cooking appliance 1000 instead of receiving location information regarding the cooking appliance 1000 from the cooking appliance 1000 is described with reference to FIG. 21.

FIG. 21 is a flowchart for describing a method by which a heating apparatus determines a location of a cooking appliance, according to an embodiment of the disclosure.

In operation S2101, the heating apparatus 2000 may transmit preset first level of power to the cooking appliance 1000 to drive the communication interface 1030 of the cooking appliance 1000. In this case, the heating apparatus 2000 may operate in the small appliance detection mode. The first level of power is power for driving the communication interface 1030 of the cooking appliance 1000 and may be, for example, about 100 W to about 300 W.

In operation S2102, according to an embodiment of the disclosure, when the cooking appliance 1000 receives the first level of power from the heating apparatus 2000, the cooking appliance 1000 may activate the communication interface 1030 and transmit a first wireless communication signal. For example, the cooking appliance 1000 may advertise the first wireless communication signal including a first packet at a certain interval by using short-range wireless communication (e.g., Bluetooth or BLE).

In operation S2103, according to an embodiment of the disclosure, when the heating apparatus 2000 receives the first wireless communication signal transmitted from the communication interface 1030 of the cooking appliance 1000, the heating apparatus 2000 may transmit power through a plurality of cooking zones according to a plurality of different power transmission patterns.

According to an embodiment of the disclosure, the first packet included in the first wireless communication signal transmitted from the cooking appliance 1000 may not include location information regarding the cooking appliance 1000. In this case, the heating apparatus 2000 may not accurately identify on which cooking zone the cooking appliance 1000 is located. Accordingly, in order to identify the location of the cooking appliance 1000, the heating apparatus 2000 may control the inverter circuit 2113 to output power according to different power transmission patterns for respective cooking zones. For example, when the heating apparatus 2000 includes three cooking zones, the heating apparatus 2000 may control the inverter circuit 2113 to output power according to a first power transmission pattern through a first working coil corresponding to a first cooking zone, output power according to a second power transmission pattern through a second working coil corresponding to a second cooking zone, and output power according to a third power transmission pattern through a third working coil corresponding to a third cooking zone. Because operation S2103 corresponds to operation S520 of FIG. 5, this will not be described repeatedly.

In operation S2104, according to an embodiment of the disclosure, the cooking appliance 1000 may detect the first power transmission pattern. According to an embodiment of the disclosure, the cooking appliance 1000 may detect one of the plurality of power transmission patterns by analyzing a voltage output from the rectifier. For example, when the cooking appliance 1000 is located in the first cooking zone, the cooking appliance 1000 may analyze a first voltage output from the rectifier and may detect the first power transmission pattern in which a duration of the power transmission interval T1 is 250 ms and a duration of the power cut-off interval T2 is 50 ms.

In operation S2105, according to an embodiment of the disclosure, the cooking appliance 1000 may transmit a second wireless communication signal including information regarding the first power transmission pattern and identification information regarding the cooking appliance 1000.

The information regarding the first power transmission pattern may include at least one of an identification value of the first power transmission pattern, a duration of a power transmission interval (or high power transmission interval), a duration of a power cut-off interval (or low power transmission interval), or a power level, but is not limited thereto. The identification information regarding the cooking appliance 1000 is unique information for identifying the cooking appliance 1000 and may include a MAC address, a model name, device type information (e.g., an IH type ID, a heater type ID, or a motor type), manufacturer information (e.g., a manufacturer ID), a serial number, or a date of manufacture, but is not limited thereto.

In operation S2106, according to an embodiment of the disclosure, the heating apparatus 2000 may determine, based on the second wireless communication signal, the first cooking zone corresponding to the first power transmission pattern as the location of the cooking appliance 1000. For example, the heating apparatus 2000 may identify the first cooking zone corresponding to the second power transmission pattern by identifying the information regarding the first power transmission pattern, included in the second wireless communication signal, and comparing the first power transmission pattern with information regarding a plurality of pre-stored power transmission patterns. In this case, the heating apparatus 2000 may determine that the cooking appliance 1000 having detected the first power transmission pattern is located in the first cooking zone.

According to an embodiment of the disclosure, when the second wireless communication signal does not include information regarding a specific power transmission pattern, the heating apparatus 2000 may output a notification to check the location of the cooking appliance 1000. For example, when the heating apparatus 2000 receives the second wireless communication signal, but the second wireless communication signal does not include the information regarding the specific power transmission pattern, it may be seen that, though the cooking appliance 1000 is the second type of cooking appliance 1000b (a small appliance) capable of performing communication, the cooking appliance 1000 is incorrectly placed and thus does not detect the specific power transmission pattern. Accordingly, the heating apparatus 2000 may output a notification to check the location of the cooking appliance 1000.

According to an embodiment of the disclosure, the heating apparatus 2000 may display the notification to check the location of the cooking appliance 1000 on the display unit, or may output the notification by speech. After the heating apparatus 2000 outputs the notification to check the location of the cooking appliance 1000, the heating apparatus 2000 may transmit power again through the plurality of cooking zones according to the plurality of different power transmission patterns.

In operation S2107, the heating apparatus 2000 may output information regarding the first cooking zone in which the cooking appliance 1000 is located, and the identification information regarding the cooking appliance 1000. For example, the heating apparatus 2000 may display that the cooking appliance 1000 is located in the first cooking zone, by displaying the identification information regarding the cooking appliance 1000 on the GUI in an area displaying a power level of the first cooking zone. Because operation S2107 corresponds to operation S540 of FIG. 5, this will not be described repeatedly.

In addition, according to an embodiment of the disclosure, the heating apparatus 2000 may identify the location of the cooking appliance 1000 by using an NFC function instead of the power transmission pattern. For example, the communication coil 1002 and an NFC module (an NFC chip) are provided in each of the heating apparatus 2000 and the cooking appliance 1000. The communication coil 1002 may be an NFC antenna coil, and the NFC module may include a circuit for NFC communication. Moreover, when the heating apparatus 2000 includes a plurality of cooking zones, the NFC antenna coil may be arranged in each of the plurality of cooking zones.

According to an embodiment of the disclosure, the NFC antenna coil included in the heating apparatus 2000 and the NFC antenna coil included in the cooking appliance 1000 may be arranged at locations corresponding to each other. For example, when the NFC antenna coil included in the heating apparatus 2000 is arranged at the center of each cooking zone, the NFC antenna coil included in the cooking appliance 1000 may be arranged at the bottom center of the cooking appliance 1000. Also, when the NFC antenna coil included in the heating apparatus 2000 is arranged on the edge (e.g., outside the transmission coil), the NFC antenna coil of the cooking appliance 1000 may be arranged at the bottom center of the cooking appliance 1000.

According to another embodiment of the disclosure, the NFC antenna coil included in the heating apparatus 2000 may be arranged on the edge of each cooking zone, and the NFC antenna coil included in the cooking appliance 1000 may be arranged at the bottom center of the cooking appliance 1000. In contrast, the NFC antenna coil included in the heating apparatus 2000 is arranged at the center of each cooking zone, and the NFC antenna coil included in the cooking appliance 1000 may also be arranged on the bottom edge of the cooking appliance 1000.

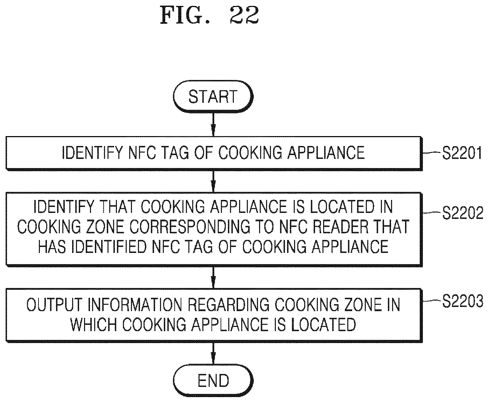

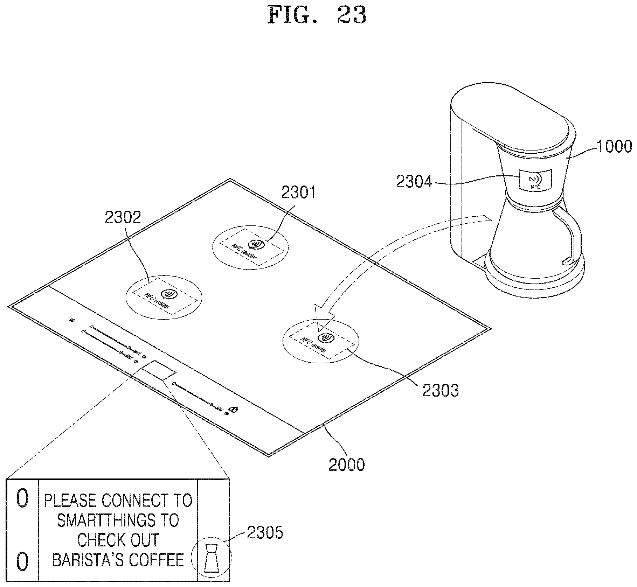

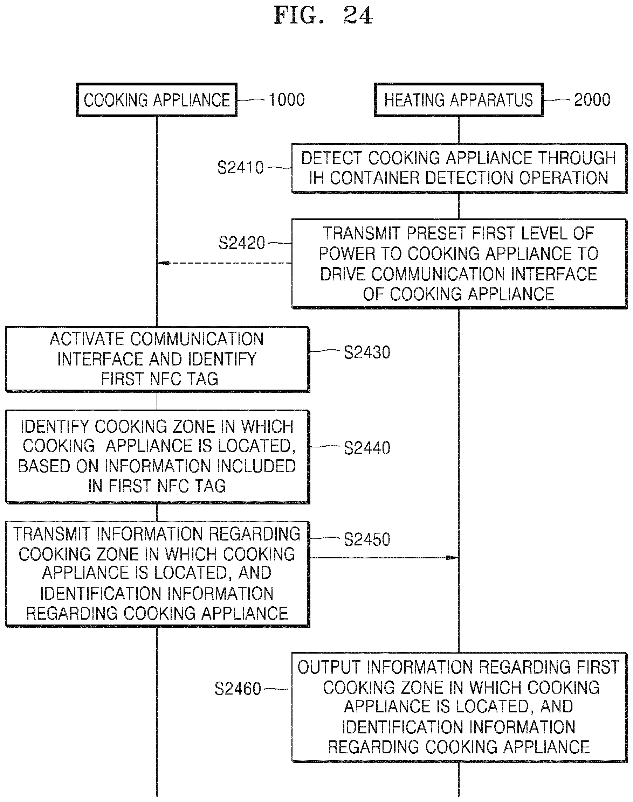

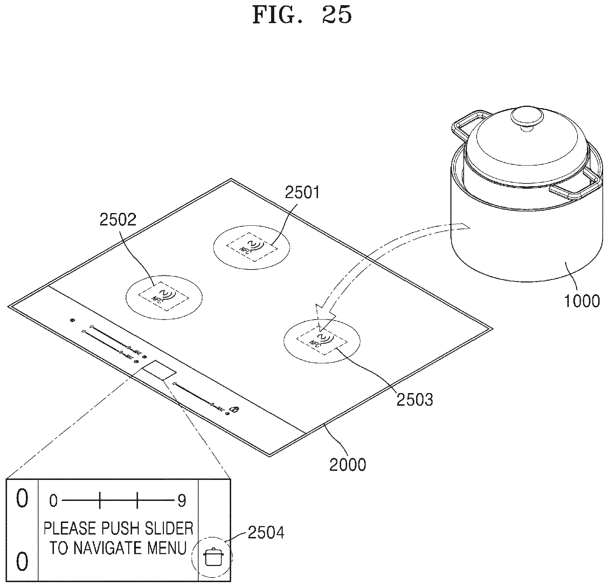

In addition, the NFC module included in each of the heating apparatus 2000 and the cooking appliance 1000 may operate as an NFC tag or as an NFC reader depending on circumstances. An embodiment in which the NFC module of the heating apparatus 2000 operates as an NFC reader and the NFC module of the cooking appliance 1000 operates as an NFC tag is first described with reference to FIGS. 22 and 23. An embodiment in which the NFC module of the heating apparatus 2000 operates as an NFC tag and the NFC module of the cooking appliance 1000 operates as an NFC reader will be described below in detail with reference to FIGS. 24 and 25.

FIG. 22 is a flowchart for describing a method by which a heating apparatus identifies a location of a cooking appliance by using an NFC tag included in the cooking appliance, according to an embodiment of the disclosure.

In operation S2201, the heating apparatus 2000 may identify an NFC tag of the cooking appliance 1000. When the heating apparatus 2000 includes a plurality of cooking zones, an NFC reader may be provided in each cooking zone. Each of the NFC reader and the NFC tag may include an NFC antenna coil. According to an embodiment of the disclosure, when the cooking appliance 1000 is placed in any one cooking zone, one of a plurality of NFC readers respectively corresponding to the plurality of cooking zones may identify the NFC tag of the cooking appliance 1000. For example, when the cooking appliance 1000 is placed in the first cooking zone, a first NFC reader provided in a first cooking zone may identify the NFC tag of the cooking appliance 1000. That is, when the cooking appliance 1000 is placed in the first cooking zone, a distance between an NFC antenna coil included in the first cooking zone and an NFC antenna coil of the cooking appliance 1000 is within a certain distance (e.g., 10 cm), and accordingly, a first NFC reader of the heating apparatus 2000 may identify the NFC tag of the cooking appliance 1000.

Identifying the NFC tag may include receiving information stored in the NFC tag. For example, the heating apparatus 2000 may obtain information stored in the NFC tag of the cooking appliance 1000 by identifying the NFC tag of the cooking appliance 1000. According to an embodiment of the disclosure, the NFC tag of the cooking appliance 1000 may store pre-agreed simple information so that the heating apparatus 2000 may identify the cooking appliance 1000. For example, the NFC tag of the cooking appliance 1000 may include identification information indicating the type of the cooking appliance 1000.

In operation S2202, the heating apparatus 2000 may identify the cooking appliance 1000 as being located in a cooking zone corresponding to the NFC reader that has identified the NFC tag of the cooking appliance 1000. NFC is a contactless wireless communication technique that may exchange data within a short distance of about 10 cm by using a frequency of 13.56 MHz band. Accordingly, when the first NFC reader among the plurality of NFC readers identifies the NFC tag of the cooking appliance 1000, the heating apparatus 2000 may determine that the cooking appliance 1000 is located in the vicinity of the first NFC reader (i.e., on the first cooking zone in which the first NFC reader is provided).

In operation S2203, the heating apparatus 2000 may output information regarding the cooking zone in which the cooking appliance 1000 is located. Also, the heating apparatus 2000 may also output identification information regarding the cooking appliance 1000, which is obtained from the NFC tag of the cooking appliance 1000. For example, the heating apparatus 2000 may display that the cooking appliance 1000 is located in the first cooking zone, by displaying the identification information (e.g., an icon) of the cooking appliance 1000 on the GUI in an area displaying a power level of the first cooking zone. Because operation S2203 corresponds to operation S540 of FIG. 5, this will not be described repeatedly.

An operation in which the heating apparatus 2000 identifies the location of the cooking appliance 1000 by using an NFC tag included in the cooking appliance 1000 is now described in a little more detail with reference to FIG. 23.

FIG. 23 is a flowchart for describing an operation in which a heating apparatus identifies a location of a cooking appliance by using an NFC tag included in the cooking appliance, according to an embodiment of the disclosure. In FIG. 23, a case in which the cooking appliance 1000 is a coffee machine is described as an example.

Referring to FIG. 23, the heating apparatus 2000 may include a first NFC reader 2301 in a first cooking zone in the upper left corner, a second NFC reader 2302 in a second cooking zone in the lower left corner, and a third NFC reader 2303 in a third cooking zone at the right center. The first NFC reader 2301, the second NFC reader 2302, and the third NFC reader 2303 may be arranged under the top plate (tempered glass) of the heating apparatus 2000 or may be arranged on the top plate of the heating apparatus 2000. Also, the first NFC reader 2301, the second NFC reader 2302, and the third NFC reader 2303 may be arranged at the center of each cooking zone or may be arranged on the edge of each cooking zone. Each of the first NFC reader 2301, the second NFC reader 2302, and the third NFC reader 2303 may include an NFC antenna coil.

When a user places the cooking appliance 1000 on the third cooking zone at the right center and presses a power button, the third NFC reader 2303 of the heating apparatus 2000 may identify an NFC tag 2304 of the cooking appliance 1000 and transmit a result of the identification to the processor 2200. For example, the third NFC reader 2303 is located within a certain distance (e.g., 10 cm) from the NFC tag 2304, the third NFC reader 2303 may obtain identification information (e.g., information regarding a product type (a coffee machine)) regarding the cooking appliance 1000, which is stored in the NFC tag 2304, and may transmit the obtained identification information regarding the cooking appliance 1000 to the processor 2200.

Because the third NFC reader 2303 has identified the NFC tag 2304 of the cooking appliance 1000, the processor 2200 of the heating apparatus 2000 may identify that the cooking appliance 1000 is located in the third cooking zone in which the third NFC reader 2303 is arranged. Also, the processor 2200 of the heating apparatus 2000 may identify whether the cooking appliance 1000 is a first type of cooking appliance 1 000a or a second type of cooking appliance 1000b, based on the identification information (e.g., information regarding a product type (a coffee machine)) regarding the cooking appliance 1000.

The heating apparatus 2000 may output, through the user interface 2500, location information regarding the cooking appliance 1000 and identification information regarding the cooking appliance 1000. For example, when the cooking appliance 1000 is a coffee machine that is the second type of cooking appliance 1000b, the heating apparatus 2000 may output that the coffee machine is located in the third cooking zone (the cooking zone at the right center), by displaying an icon 2305 of the coffee machine at a location corresponding to the third cooking zone (the cooking zone at the right center). Also, the heating apparatus 2000 may output a pre-stored notification (e.g., "Please connect to SmartThings to check out barista's coffee") related to the coffee machine.

According to another embodiment of the disclosure, the heating apparatus 2000 may also identify the location of the cooking appliance 1000 by using an NFC tag included in each cooking zone. Hereinafter, an operation in which the heating apparatus 2000 including a plurality of NFC tags identifies the location of the cooking appliance 1000 is described in detail with reference to FIG. 24.

FIG. 24 is a flowchart for describing a method by which a heating apparatus identifies a location of a cooking appliance by using NFC, according to an embodiment of the disclosure. In FIG. 24, a case in which the cooking appliance 1000 is a second-first type of cooking appliance 1000b-1 including a magnetic material and a communication interface 1030 is described as an example.

In operation S2410, the heating apparatus 2000 may detect the cooking appliance 1000 through an IH container detection operation. For example, the heating apparatus 2000 may detect the second-first type of cooking appliance 1000b-1 including a magnetic material, by sensing a current value of a working coil after power for detecting an IH container is transmitted.

In operation S2420, the heating apparatus 2000 may transmit preset first level of power to the cooking appliance 1000 to drive the communication interface 1030 of the cooking appliance 1000.

When the heating apparatus 2000 detects that the second-first type of cooking appliance 1000b-1 is located on the top plate of the heating apparatus 2000, the heating apparatus 2000 may wirelessly transmit, to the pickup coil 1001, first level of power (low power) for driving the PCB 1005 of the cooking appliance 1000. For example, the heating apparatus 2000 may control the inverter circuit 2113 so that a current corresponding to the first level of power flows through the working coil 2120.

According to an embodiment of the disclosure, the cooking appliance 1000 may receive the first level of power transmitted from the heating apparatus 2000 and supply power to the PCB 1005 through the pickup coil 1001. For example, the pickup coil 1001 may receive wireless power and supply AC power to the SMPS. The SMPS may convert the supplied AC power into DC power and supply the DC power to the PCB 1005. In this case, the controller 1020 and the communication interface 1030 (e.g., an NFC module) mounted on the PCB 1005 may be driven.

In operation S2430, the cooking appliance 1000 may activate the communication interface 1030 based on the first level of power and may identify a first NFC tag among the plurality of NFC tags included in the heating apparatus 2000.

According to an embodiment of the disclosure, an NFC tag including identification information regarding a cooking zone may be attached to each cooking zone of the heating apparatus 2000. For example, the first NFC tag may be attached to a first cooking zone, a second NFC tag may be attached to a second cooking zone, and a third NFC tag may be attached to a third cooking zone. In this case, each of the first NFC tag, the second NFC tag, and the third NFC tag may include an NFC antenna coil. According to an embodiment of the disclosure, the first NFC tag may store identification information (e.g., a first burner, an upper left burner, etc.) regarding the first cooking zone, the second NFC tag may store identification information (e.g., a second burner, a lower left burner, etc.) regarding the second cooking zone, and the third NFC tag may store identification information (e.g., a third burner, a right center burner, etc.) regarding the third cooking zone.

According to an embodiment of the disclosure, when the second-first type of cooking appliance 1000b-1 is placed on the first cooking zone, the second-first type of cooking appliance 1000b-1 may identify the first NFC tag attached to the first cooking zone through the communication coil 1002 (e.g., an NFC antenna coil) and the communication interface 1030 (e.g., an NFC module). For example, the second-first type of cooking appliance 1000b-1 may obtain the identification information (e.g., the first burner, the upper left burner, etc.) regarding the first cooking zone, which is stored in the first NFC tag.

In operation S2440, the cooking appliance 1000 may identify a cooking zone in which the cooking appliance 1000 is located, based on information included in the first NFC tag. For example, the cooking appliance 1000 may identify the identification information (e.g., the first burner, the upper left burner, etc.) regarding the first cooking zone, which is stored in the first NFC tag, and may identify that the cooking appliance 1000 is located in the first cooking zone.

In operation S2450, the cooking appliance 1000 may transmit, to the heating apparatus 2000, information regarding the cooking zone in which the cooking appliance 1000 is located, and the identification information regarding the cooking appliance 1000. For example, the cooking appliance 1000 may transmit, to the heating apparatus 2000, information regarding the first cooking zone and the identification information regarding the cooking appliance 1000 through short-range wireless communication (e.g., NFC, Bluetooth, or BLE).

In operation S2460, the heating apparatus 2000 may output the information regarding the first cooking zone in which the cooking appliance 1000 is located, and the identification information regarding the cooking appliance 1000. For example, the heating apparatus 2000 may display that the cooking appliance 1000 is located in the first cooking zone, by displaying the identification information (e.g., an icon) of the cooking appliance 1000 on the GUI in an area displaying a power level of the first cooking zone. Because operation S2460 corresponds to operation S540 of FIG. 5, this will not be described repeatedly.

An operation in which the heating apparatus 2000 identifies the location of the cooking appliance 1000 by using a plurality of NFC tags is now described in a little more detail with reference to FIG. 25.

FIG. 25 is a flowchart for describing an operation in which a heating apparatus identifies a location of a cooking appliance by using NFC, according to an embodiment of the disclosure. In FIG. 25, a case in which the cooking appliance 1000 is a smart pot that is a second-first type of cooking appliance 1000b-1 is described as an example.

Referring to FIG. 25, the heating apparatus 2000 may include a first NFC tag 2501 in a first cooking zone in the upper left corner, a second NFC tag 2502 in a second cooking zone in the lower left corner, and a third NFC tag 2503 in a third cooking zone at the right center. The first NFC tag 2501, the second NFC tag 2502, and the third NFC tag 2503 may be arranged under the top plate (tempered glass) of the heating apparatus 2000 or may be arranged on the top plate of the heating apparatus 2000. Also, the first NFC tag 2501, the second NFC tag 2502, and the third NFC tag 2503 may be arranged at the center of each cooking zone or may be arranged on the edge of each cooking zone. Each of the first NFC tag 2501, the second NFC tag 2502, and the third NFC tag 2503 may include an NFC antenna coil.

When a user places the cooking appliance 1000 on the third cooking zone at the right center and presses a power button, the heating apparatus 2000 may transmit power for driving the communication interface 1030 of the cooking appliance 1000. In this case, the cooking appliance 1000 may activate the communication interface 1030 (e.g., an NFC module) and may identify the third NFC tag 2503 attached to the third cooking zone. For example, because the cooking appliance 1000 is located with a certain distance (e.g., 10 cm) from the third NFC tag 2503, the cooking appliance 1000 may obtain identification information regarding the third cooking zone, which is stored in the third NFC tag 2503, through the NFC module.

The cooking appliance 1000 may identify that the cooking appliance 1000 is located in the third cooking zone (the cooking zone at the right center), based on the identification information regarding the third cooking zone obtained from the third NFC tag 2503. In addition, the cooking appliance 1000 may transmit, to the heating apparatus 2000, information regarding the third cooking zone and identification information regarding the cooking appliance 1000 through short-range wireless communication. In this case, the heating apparatus 2000 may output, through the user interface 2500, that the cooking appliance 1000 is located in the third cooking zone. For example, when the cooking appliance 1000 is a smart pot that is the second-first type of cooking appliance 1000b-1, the heating apparatus 2000 may output that the smart pot is located in the third cooking zone (the cooking zone at the right center), by displaying an icon 2504 of the smart pot at a location corresponding to the third cooking zone (the cooking zone at the right center). In FIGS. 22 to 25, the case in which the heating apparatus 2000 identifies the location of the cooking appliance 1000 by using the NFC tag has been described as an example, but the disclosure is not limited thereto. For example, the heating apparatus 2000 may detect the location of the cooking appliance 1000 by using a radio frequency identification (RFID) tag in addition to the NFC tag.

FIG. 26 is a diagram for describing an operation in which a heating apparatus is interlocked with a server apparatus, according to an embodiment of the disclosure.

Referring to FIG. 26, according to an embodiment of the disclosure, the cooking system 100 may further include a server apparatus 3000 and a display apparatus 4000, in addition to the cooking appliance 1000 and the heating apparatus 2000. Because the cooking system 100 including the cooking appliance 1000 and the heating apparatus 2000 has been described with reference to FIG. 1, the server apparatus 3000 and the display apparatus 4000 are now described.

According to an embodiment of the disclosure, the server apparatus 3000 may include a communication interface for communicating with an external apparatus. The server apparatus 3000 may communicate with the cooking appliance 1000, the heating apparatus 2000, or the display apparatus 4000 through the communication interface. According to an embodiment of the disclosure, the cooking appliance 1000 may access the server apparatus 3000 by transmitting, to the server apparatus 3000, identification information regarding the cooking appliance 1000 or identification information (login information or account information) regarding a user and receiving, from the server apparatus 3000, authentication for the identification information regarding the cooking appliance 1000 or the identification information (login information or account information) regarding the user. Also, the heating apparatus 2000 may access the server apparatus 3000 by transmitting, to the server apparatus 3000, identification information regarding the heating apparatus 2000 or identification information (login information or account information) regarding a user and receiving, from the server apparatus 3000, authentication for the identification information regarding the heating apparatus 2000 or the identification information (login information or account information) regarding the user.

According to an embodiment of the disclosure, the server apparatus 3000 may include an AI processor. The AI processor may train an artificial neural network to generate an artificial intelligence model for recommending a temperature control method. 'Training' the artificial neural network may refer to creating a mathematical model that allows optimal decision-making by connecting neurons constituting the artificial neural network while appropriately changing weight values based on data.

According to an embodiment of the disclosure, the display apparatus 4000 may be an apparatus that is connected to the server apparatus 3000 and displays information provided from the server apparatus 3000. According to an embodiment of the disclosure, the display apparatus 4000 may transmit/receive information to/from the server apparatus 3000 through a specific application (e.g., a home appliance management application) installed in the display apparatus 4000.

According to an embodiment of the disclosure, the display apparatus 4000 may be an apparatus that is connected to the cooking appliance 1000 and the heating apparatus 2000 with the same account information. The display apparatus 4000 may be directly connected to the cooking appliance 1000 and the heating apparatus 2000 through a short-range wireless communication channel or may be indirectly connected to the cooking appliance 1000 and the heating apparatus 2000 through the server apparatus 3000.

According to an embodiment of the disclosure, the display apparatus 4000 may be implemented in various forms. For example, the display apparatus 4000 described in the disclosure may include a mobile terminal, a refrigerator including a display, a TV, a computer, or an oven including a display, but is not limited thereto. Also, the mobile terminal may include a smartphone, a laptop computer, a tablet personal computer (PC), a digital camera, an E-book terminal, a digital broadcasting terminal, a personal digital assistant (PDA), a portable multimedia player (PMP), a navigation device, or an MP3 player, but is not limited thereto. For example, the mobile terminal may be a wearable device that may be worn by a user. Hereinafter, for convenience of description, a case in which the display apparatus 4000 is a smartphone is described as an example.

According to an embodiment of the disclosure, the display apparatus 4000 or the heating apparatus 2000 may receive a speech signal, which is an analog signal, through a microphone and may convert a speech part into computer-readable text by using an ASR model. The display apparatus 4000 or the heating apparatus 2000 may obtain a user's intention to speak by interpreting the converted text by using an NLU model. In this case, the ASR model or the NLU model may be an Al model. The AI model may be processed by an AI-only processor designed in a hardware structure specialized for processing the Al model. The AI model may be created through learning. According to the disclosure, such learning may be achieved by a device itself (e.g., the display apparatus 4000 or the heating apparatus 2000) on which artificial intelligence is performed, or may be achieved through a separate server apparatus 3000 and/or a separate system. Examples of learning algorithms include supervised learning, unsupervised learning, semi-supervised learning, or reinforcement learning, but are not limited to the aforementioned examples.

The AI model may include a plurality of neural network layers. Each of the plurality of neural network layers has a plurality of weight values, and may perform a neural network operation by using an operation result of a previous layer and an operation between the plurality of weight values. The plurality of weight values of the plurality of neural network layers may be optimized based on a learning result of the AI model. For example, the plurality of weight values may be updated to reduce or minimize a loss value or a cost value obtained from the AI model during a learning process. An artificial neural network may include a deep neural network (DNN), for example, a convolutional neural network (CNN), a deep neural network (DNN), a recurrent neural network (RNN), a restricted Boltzmann machine (RBM), a deep belief network (DBM), a bidirectional recurrent deep neural network (BRDNN), or deep Q-networks, but is not limited to the aforementioned examples.

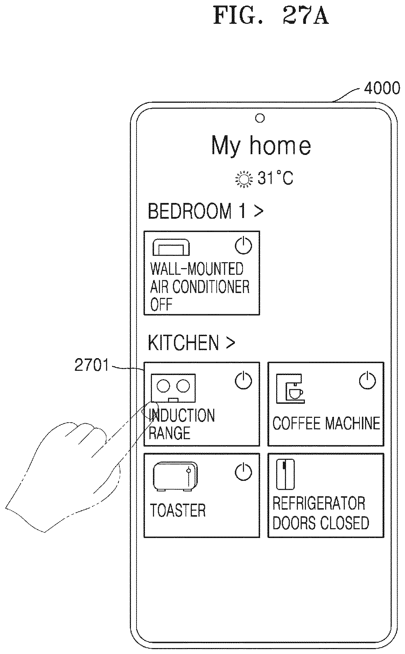

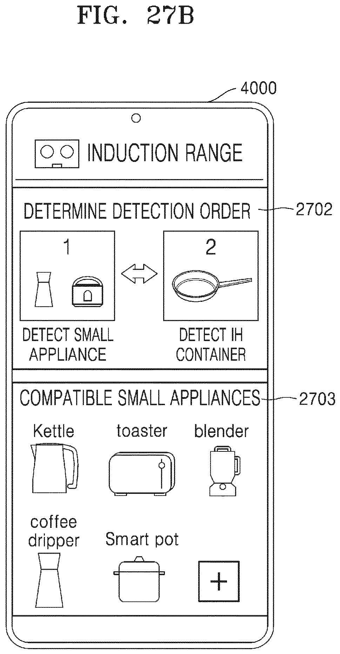

According to an embodiment of the disclosure, the display apparatus 4000 may execute, based on a user input, a specific application (e.g., a home appliance management application) provided from the server apparatus 3000. In this case, a user may set the order of an IH container detection operation and a small appliance detection operation through an application execution window. Hereinafter, an operation in which a user sets the order of an IH container detection operation and a small appliance detection operation by using a specific application (e.g., a home appliance management application) provided from the server apparatus 3000 is described with reference to FIGS. 27A and 27B.

FIGS. 27A and 27B are diagrams for describing an operation in which a server apparatus provides information regarding a heating apparatus through a display apparatus, according to an embodiment of the disclosure.

Referring to FIG. 27A, when a user executes an application for managing home appliances of the user on the display apparatus 4000, the display apparatus 4000 may receive information from the server apparatus 3000 and display a list of home appliances on an application execution window. The home appliances of the user may be registered in the server apparatus 3000 with the same account. The home appliances may include the cooking appliance 1000 and the heating apparatus 2000.

For example, the display apparatus 4000 may display, on the application execution window, a list of icons indicating a heating apparatus 2000 (an induction range), a coffee machine, a toaster, a refrigerator, etc. In this case, the display apparatus 4000 may receive a user input for selecting an icon 2701 indicating the heating apparatus 2000.

Referring to FIG. 27B, the display apparatus 4000 may display, in response to the user input for selecting the icon 2701, a setting screen related to the heating apparatus 2000 on the application execution window.

For example, the display apparatus 4000 may display, on the application execution window, a first field 2702 for selecting the order of detection operations, and a second field 2703 indicating a list of compatible small appliances. The first field 2702 may include a GUI for determining the order of small appliance detection and IH container detection, but is not limited thereto. Through the first field 2702, the user may set the heating apparatus 2000 to perform small appliance detection prior to IH container detection or to perform IH container detection prior to small appliance detection.

A list of small appliances compatible with the heating apparatus 2000 may be displayed in the second field 2703. In this case, the small appliances may be connected to the heating apparatus 2000 with the same account. For example, the second field 2703 may display a kettle icon, a toaster icon, a blender icon, a coffee dripper icon, or a smart pot icon, but is not limited thereto.

Through the second field 2703, the user may add a new small appliance compatible with the heating apparatus 2000 to the list or may delete a small appliance that is no longer used from the list.

The method according to the embodiments of the disclosure may be implemented in the form of program commands that can be executed by various computer means, and may be recorded on computer-readable recording media. The computer-readable recording media may include program commands, data files, data structures etc. alone or in combination. The program commands written to the computer-readable recording media may be specifically designed and configured for the embodiments of the disclosure or may be well-known and available to one of ordinary skill in the art. Examples of the computer readable recording media include magnetic media (e.g., hard disks, floppy disks, magnetic tapes, etc.), optical media (e.g., compact disc (CD)-ROMs, or digital video discs (DVDs)), magneto-optical media (e.g., floptical disks), and hardware devices (e.g., ROM, RAM, flash memories, etc.) specifically configured to store and execute program commands. Examples of the program commands include advanced language codes that can be executed by a computer by using an interpreter or the like as well as machine language codes made by a compiler.

Some embodiments of the disclosure may be implemented in the form of computer-readable recording media, such as program modules to be executed by computers, which include computer-executable instructions. The computer-readable recording media may be any available media accessible by computers, and may include volatile or non-volatile media and detachable or non-detachable media. Furthermore, the computer- readable recording media may include both computer storage media and communication media. The computer storage media include both volatile and non-volatile, detachable or non-detachable media implemented using any method or technique for storing information, such as computer-readable instructions, data structures, program modules, or other data. The communication media generally include computer-readable instructions, data structures, program modules, other data in a modulated data signal, or other transmission mechanisms, and include any information transmission media. Also, some embodiments of the disclosure may be implemented as computer programs or computer program products, such as computer programs executed by computers, which include computer-executable instructions.

A device-readable storage medium may be provided in the form of a non-transitory storage medium. In this regard, the term 'non-transitory storage medium' simply means that the storage medium is a tangible device and does not include a signal (e.g., an electromagnetic wave), but this term does not differentiate between where data is semi-permanently stored in the storage medium and where the data is temporarily stored in the storage medium. For example, the 'non-transitory storage medium' may include a buffer in which data is temporarily stored.

According to an embodiment of the disclosure, the method according to various embodiments disclosed herein may be included and provided in a computer program product. The computer program product can be traded as a commodity between a seller and a buyer. The computer program product may be distributed in the form of a machine-readable storage medium (e.g., CD-ROM), or be distributed (e.g., downloaded or uploaded) online via an application store, or between two user devices (e.g., smartphones) directly. In the case of online distribution, at least a part of the computer program product (e.g., a downloadable app) may be temporarily stored or temporarily generated in a device-readable storage medium, such as a memory of a manufacturer server, an application store server, or a relay server.

## Claims

1. A wireless power transmission apparatus, comprising:
a plurality of cooking zones;
a communication interface configured to communicate with a cooking appliance;
an output interface configured to display information regarding the cooking appliance;
a wireless power transmitter comprising a plurality of working coils corresponding to the plurality of cooking zones, and an inverter circuit configured to drive the plurality of working coils; and
at least one processor configured to:
control, upon detecting a first wireless communication signal transmitted from the cooking appliance through the communication interface , the inverter circuit to drive the plurality of working coils to generate a magnetic field according to a plurality of power transmission patterns that are different,
receive a second wireless communication signal from the cooking appliance through the communication interface, the second wireless communication signal comprising information regarding a cooking zone, among the plurality of cooking zones, corresponding to a power transmission pattern detected at a location of the cooking appliance, among the plurality of power transmission patterns, and identification information regarding the cooking appliance; and
control the output interface to output, based on the second wireless communication signal, the information regarding the cooking zone at the location of the cooking appliance , among the plurality of cooking zones, and the identification information regarding the cooking appliance.

2. The wireless power transmission apparatus of claim 1, wherein the plurality of power transmission patterns are set differently based on at least one of a duration of a power transmission interval, a duration of a power cut-off interval, or a power level.

3. The wireless power transmission apparatus of claim 1, wherein the at least one processor is further configured to:
control the inverter circuit to supply power of a preset level to the cooking appliance to drive the communication interface of the cooking appliance; and
when the communication interface of the cooking appliance is driven, receive the first wireless communication signal transmitted from the communication interface of the cooking appliance.

4. The wireless power transmission apparatus of claim 1, further comprising a current sensor configured to measure current values of the plurality of working coils, and
wherein the at least one processor is further configured to:
in response to receipt of a user input, control the inverter circuit to transmit, to the cooking appliance, power to detect an induction-heating container comprising a magnetic material; and
upon the power being transmitted to the cooking appliance, control the current sensor to detect that the cooking appliance which comprises the magnetic material is on a top plate of the wireless power transmission apparatus, based on the current values of the plurality of working coils measured by the current sensor.

5. The wireless power transmission apparatus of claim 4, wherein the at least one processor is further configured to:
when the first wireless communication signal is not received from the cooking appliance within a certain time after detection that the cooking appliance is on the top plate of the wireless power transmission apparatus, identify a type of the cooking appliance as a general induction-heating container.

6. The wireless power transmission apparatus of claim 1, wherein the at least one processor is further configured to:
in response to detection of the first wireless communication signal transmitted from the communication interface of the cooking appliance, identify a type of the cooking appliance as being enabled to perform communication,
wherein the type of the cooking appliance is at least one of a coffee maker, an electric rice cooker, a kettle, a blender, or a toaster.

7. The wireless power transmission apparatus of claim 1, wherein the at least one processor is further configured to control the output interface to output a graphical user interface (GUI) corresponding to the identification information regarding the cooking appliance.

8. The wireless power transmission apparatus of claim 1, wherein the at least one processor is further configured to:
when the second wireless communication signal is received from the cooking appliance, operate in a power transmission standby mode to transmit power to the cooking appliance through the cooking zone.

9. The wireless power transmission apparatus of claim 8, wherein the at least one processor is further configured to:
based on communication connection information included in the second wireless communication signal, perform a communication connection with the cooking appliance;
control the inverter circuit to transmit, to a pickup coil of the cooking appliance, a first level of power to maintain the communication connection with the cooking appliance; and
in response to receipt of an operation command for the cooking appliance from a user, control the inverter circuit to transmit, to the cooking appliance, a second level of power to operate the cooking appliance,
wherein the first level of power is lower than the second level of power.

10. The wireless power transmission apparatus of claim 1, wherein the at least one processor is further configured to:
when no information regarding the cooking zone at the location of the cooking appliance is received within a certain time after the inverter circuit is controlled to drive the plurality of working coils to generate the magnetic field according to the plurality of power transmission patterns, control the output interface to output a notification to check the location of the cooking appliance.

11. The wireless power transmission apparatus of claim 1, wherein the at least one processor is further configured to:
in response to release of a communication connection with the cooking appliance, control the output interface to output a notification to check the location of the cooking appliance.

12. A method, of identifying a location of a cooking appliance on a wireless power transmission apparatus, the method comprising:
detecting, by the wireless power transmission apparatus through a communication interface, a first wireless communication signal transmitted from the cooking appliance, the wireless power communication apparatus having a plurality of cooking zones;
controlling, upon detecting the first wireless communication signal , an inverter circuit to drive a plurality of working coils corresponding to the plurality of cooking zones to generate a magnetic field according to a plurality of power transmission patterns that are different;
receiving a second wireless communication signal from the cooking appliance through the communication interface, the second wireless communication signal comprising information regarding a cooking zone corresponding to a power transmission pattern detected at a location of the cooking appliance, among the plurality of power transmission patterns, and identification information regarding the cooking appliance; and
control an output interface to output, based on the second wireless communication signal, the information regarding the cooking zone at the location of the cooking appliance, among the plurality of cooking zones, and the identification information regarding the cooking appliance.

13. The method of claim 12, wherein the detecting of the first wireless communication signal comprises:
controlling the inverter circuit to transmit a preset first level of power to the cooking appliance to drive a communication interface of the cooking appliance; and
when the communication interface of the cooking appliance is driven, receiving the first wireless communication signal transmitted from the communication interface of the cooking appliance.

14. The method of claim 12, further comprising:
in response to receipt of a user input, controlling the inverter circuit to transmit, to the cooking appliance, power to detect an induction-heating container comprising a magnetic material; and
upon the power being transmitted to the cooking appliance, controlling a current sensor to detect that the cooking appliance which comprises the a magnetic material is on a top plate of the wireless power transmission apparatus, based on current values of the plurality of working coils measured by the current sensor.

15. The method of claim 12, further comprising, in response to detection of the first wireless communication signal transmitted from the communication interface of the cooking appliance, identifying a type of the cooking appliance as being enabled to perform communication.
